(19) Europäisches Patentamt / European Patent Office / Office européen des brevets

(11) **EP 3 010 971 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(51) Int Cl.:
***C08K 5/54*** *(2006.01)* ***C08L 73/00*** *(2006.01)*
***C08L 77/00*** *(2006.01)* ***C08L 83/14*** *(2006.01)*

(21) Anmeldenummer: **15714792.7**

(22) Anmeldetag: **31.03.2015**

(86) Internationale Anmeldenummer:
**PCT/EP2015/057080**

(87) Internationale Veröffentlichungsnummer:
**WO 2015/150409 (08.10.2015 Gazette 2015/40)**

(54) **HAFTVERMITTLER FÜR METALL-KUNSTSTOFF-HYBRIDBAUTEIL**

ADHESION PROMOTERS FOR METAL-RESIN HYBRIDE COMPONENT

PROMOTEURS D'ADHÉSION POUR ÉLÉMENT HYBRIDE MÉTAL-PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2014 DE 102014206022**

(43) Veröffentlichungstag der Anmeldung:
**27.04.2016 Patentblatt 2016/17**

(73) Patentinhaber: **Evonik Degussa GmbH**
**45128 Essen (DE)**

(72) Erfinder:
- **KUHMANN, Karl**
  **48249 Dülmen (DE)**
- **GRUHN, Maximilian**
  **45770 Marl (DE)**
- **FARGES, Olivier**
  **45768 Marl (DE)**
- **RISTHAUS, Martin**
  **59399 Olfen (DE)**
- **LEHMANN, Kathrin**
  **51377 Leverkusen (DE)**

(56) Entgegenhaltungen:
**EP-A1- 1 820 832** **EP-A1- 1 900 786**
**EP-A2- 1 808 468** **WO-A1-2010/136241**
**WO-A1-2013/102590** **DE-A1- 2 118 796**
**DE-C1- 3 545 032** **US-A- 3 813 351**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 010 971 B1

Printed by Jouve, 75001 PARIS (FR)

## Beschreibung

Die vorliegende Erfindung betrifft eine Polymerzusammensetzung, eine Folie, ein Kunststoffhalbzeug, ein Verfahren zur Herstellung eines Kunststoffhalbzeugs, ein Hybridbauteil sowie Verfahren zur Herstellung von Hybridbauteilen.

Hybridbauteile (auch Strukturbauteile) sind Verbunde der beiden Werkstoffe Metall und Kunststoff. Sie können beispielsweise durch das Spritzgießverfahren hergestellt werden. Hierbei wird ein Metall-Einlegeteil in ein Werkzeug eingelegt und diene Kunststoffkomponente zum Beispiel im Spritzguss- oder Pressverfahren unter Druck und Temperatur geformt. Es entsteht ein Hybridbauteil mit Metall- und Kunststoffbereichen.

Hybridbauteile sind Komponenten, die unter anderem im Fahrzeugbau und im Flugzeugbau sowie in der Elektronik und der Elektrotechnik im Bereich tragender Teile, kraftaufnehmender Teile oder als Teil des Gehäuses, bspw. für dekorative Zwecke, zum Einsatz kommen. Sie zeichnen sich insbesondere dadurch aus, dass sie lokale Verstärkungen aufweisen, die dem Bauteil besondere mechanische Eigenschaften verleihen, und/oder die Möglichkeit zur Funktionsintegration bieten. Besonders hervorzuheben ist die Erhöhung der Bauteilsteifigkeit bei zusätzlicher Gewichtsreduzierung im Vergleich zu bisher eingesetzten Komponenten in konventioneller Bauweise.

In den zuvor genannten Einsatzgebieten werden zunehmend Hybridbauteile eingesetzt, um eine Verringerung der Masse bei gleichzeitig optimierten mechanischen Eigenschaften zu erhalten. Der Nachteil dieser Hybridbauteile liegt in der fehlenden bzw. unzureichenden Haftung zwischen Metall und Kunststoff. Insofern wurden bisher mechanische Verankerungen des Kunststoffs am Metall durchgeführt.

Die Haftung zwischen Metall und Kunststoff kann durch Haftvermittler verbessert werden. Aus EP-A-1808468 und EP-A-2435246 sind Hybridbauteile bekannt, wobei Metall und Kunststoff durch Schmelzklebstoffe als Haftvermittler auf Copolyamid-Basis, die zusätzlich Isocyanat- und Epoxidgruppen enthalten, verbunden sind.

Insbesondere im Automobilbereich sind Metallsubstrate bekannt, die Konversionsschichten umfassen, welche zur Oberflächenbehandlung eingesetzt werden. Die Schichten entstehen beispielsweise durch Phosphatieren oder Chromatierung auf der Oberfläche.

Die Hybridbauteile des Standes der Technik weisen zwischen Metall und Kunststoff derzeit eine noch nicht ausreichende Haftung auf, um den Anforderungen an eine Serienproduktion beispielsweise im Automobilsektor gerecht zu werden: Die Hybridbauteile werden in der Verarbeitung beispielsweise mit kathodischen Tauchlacken sowie Basis- und/oder Klarlacken versehen. Hierbei werden die Hybridbauteile unterschiedlichen Bedingungen wie Säure, Druck oder Temperatur ausgesetzt. Die Folge ist häufig eine Verringerung der Haftung zwischen Metall und Kunststoff bis hin zum Totalverlust der Haftung. Die unzureichende Haftung ist beispielsweise in der Inkompatibilität vieler Kunststoffe zu diversen Metallen oder in der variierenden chemischen und physikalischen Beschaffenheit der Substratoberflächen zu sehen, die auf Grund von Oxidations- und Korrosionsprozessen infolge von Umwelt- oder Medieneinflüssen entstehen.

Die Aufgabe bestand folglich darin, eine Zusammensetzung als Haftvermittler zwischen Kunststoff und Metall zur Verfügung zu stellen, der die Nachteile des Standes der Technik nicht aufweist. Demnach sollten die Hybridbauteile umfassend die Zusammensetzung eine gegenüber dem Stand der Technik verbesserte bzw. erhöhte Haftung zwischen Metall und Kunststoff aufweisen. Darüber hinaus sollten die erhaltenen Hybridbauteile den Anforderungen des Fahrzeug- und Flugzeugbaus sowie der Elektronik- und Elektrotechnik-Industrie genügen. Zudem sollte eine gute Witterungsbeständigkeit, insbesondere Korrosionsschutzbeständigkeit, gegeben sein. Metall und Kunststoff des Hybridbauteils sollen zumindest teilweise stoffschlüssig miteinander verbunden sein. Weiterhin sollten die Zusammensetzungen eine gegenüber den als Haftvermittler fungierenden Zusammensetzungen des Standes der Technik geringere Wasseraufnahme und eine verbesserte Kälteschlagzähigkeit aufweisen.

Ebenso sollte die Zusammensetzung geeignet sein, als Bestandteil des Kunststoffs eines Kunststoff-Metall-Hybridbauteils zur Haftvermittlung eingesetzt zu werden.

Demgemäß ist eine Polymerzusammensetzung der eingangs genannten Art gefunden worden, wodurch Hybridbauteile bereitgestellt werden können, die eine verbesserte Haftung zwischen

Metall und Kunststoff aufweisen. Die erfindungsgemäße Zusammensetzung enthält

a) 50 bis 99,7 Gew.-%, vorzugsweise 60 bis 99,5 Gew.-% und bevorzugt 75 bis 99,5 Gew.-% mindestens eines Polymers, ausgewählt aus Polyamiden, ihren Mischungen und Polyaryletherketonen, und

b) 0,3 bis 20 Gew.-%, vorzugsweise 0,5 bis 20 Gew.-% eines oder mehrerer Additive der Formel (I):

$$M_aM'_bD_cD'_d \qquad (I)$$

mit

$M = [R_3SiO_{1/2}]$
$M' = [R'R_2SiO_{1/2}]$

D = $[R_2SiO_{2/2}]$
D' = $[R'RSiO_{2/2}]$

wobei jedes R unabhängig voneinander ausgewählt ist aus der Gruppe bestehend aus H, Alkylresten mit 1 bis 12 C-Atomen und einem Phenylrest, und
R', vorzugsweise unabhängig voneinander, ausgewählt ist aus einem oder mehreren
Resten der Formeln (II), (III) oder (IV),
wobei (II) ein Alkylamino-Rest

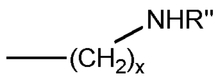
(II)

mit x = 1 bis 20 und R", ausgewählt aus H und einem Alkylrest mit 1 bis 12 C-Atomen, (III) ein (Trialkoxysilyl)methylen-Rest

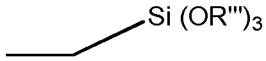
(III)

worin R''' ein Alkylrest mit 1 bis 4 C-Atomen ist, und (IV) ein Epoxycyclohexylalkyl-Rest

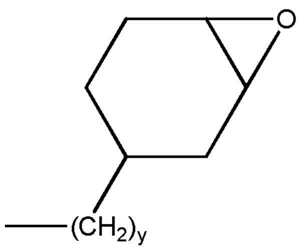
(IV)

mit y = 1 bis 4, vorzugsweise y = 2 bis 4, bevorzugt 2 oder 3, besonders bevorzugt 2 bedeuten,
wobei für die Indizes gilt

a = 0 bis 2
b = 0 bis 2
c = 10 bis 500
d = 0 bis 50

$$a + b = 2$$

und

$$b + d \geq 2,$$

und wobei sich die Anteile aller Bestandteile der Zusammensetzung zu 100 Gew.-% addieren. Das Additiv wirkt haftvermittelnd ("haftvermittelndes Additiv"). Der Rest (IV) kann nach IUPAC-Nomenklatur auch als 7-oxabicyclo[4.1.0]heptan-3-ylalkylen-Gruppe bezeichnet werden. Maßgebend sind die angegebenen Strukturen (II), (III) und (IV).

Der Rest R' kann unabhängig voneinander ausgewählt aus mehreren der Reste der Formeln (II), (III) und (IV). Hierbei sind Additive (I) bevorzugt, die eine Mischung aus den Resten (II) und (IV) oder (III) und (IV) enthalten, wobei Mischungen der Reste (III) und (IV) besonders bevorzugt sind. Das molare Verhältnis der Reste (II) zu (IV) bzw. (III) zu

(IV) liegt vorzugsweise im Bereich von 1:10 bis 10:1, wobei ein Überschuss an (IV) bevorzugt ist.

Vorzugsweise wird der Rest R aus einem Methyl- oder Phenylrest ausgewählt.

DieReste der Formeln (II) und (III) können im Additiv der Formel (I) statistisch verteilt vorliegen. Statistische Verteilungen können blockweise aufgebaut sein mit einer beliebigen Anzahl an Blöcken, die einer beliebigen Sequenz aufeinanderfolgen oder sie können eine randomisierten Verteilung bilden, sie können auch alternierend aufgebaut sein oder auch über die Kette des Polymers einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

In einer bevorzugten Ausführungsform der Erfindung liegt das Verhältnis der Summe der Indizes a + c zur Summe der Indizes b + d im Bereich (a+c)/(b+d) von 2 bis 50, insbesondere im Bereich von 4 bis 20, besonders bevorzugt im Bereich von 5 bis 15. Ein zu geringer Anteil des Rests R' führt zu einer nicht hinreichenden stoffschlüssigen Anbindung an die Oberfläche des metallischen Grundkörpers. Zu hohe Anteile erschweren dagegen die Verarbeitung des Additivs zur Polymerzusammensetzung und die Synthese dieser Additive ist wesentlich aufwendiger.

Für den Index c gilt vorzugsweise c = 15 bis 100, und bevorzugt c = 20 bis 50. Weiterhin bevorzugt gilt

(i) für den Fall b = 2, dass für Index d gilt: d = 0 bis 20, insbesondere d = 1 bis 10; und

(ii) für den Fall b = 0, dass für Index d gilt: d = 2 bis 20, insbesondere d = 3 bis 10. Mit den genannten Festlegungen lassen sich die Eigenschaften des Additivs mit Hinsicht auf die Polyamidmatrix und spätere Weiterverarbeitung der Polymerzusammensetzung, zum Beispiel zu einer Folie, optimieren.

Die Polymerzusammensetzung enthält vorzugsweise 0,5 bis 10 Gew.-% und bevorzugt 1 bis 5 Gew.-% des Additivs der Formel (I). Bei zu geringer Additivkonzentration ist die Haftwirkung nicht mehr ausreichend. Zu hohe Additivkonzentrationen haben dagegen eine negative Auswirkung auf die mechanischen, thermischen und rheologischen Eigenschaften des Polymers (Viskosität steigt an, Wärmeausdehnungskoeffizient nimmt zu, Selbstvernetzung des Additivs, Agglomeratbildung).

Die Additive der Formel (I) und ihre Herstellung sind beispielsweise aus US 2007/287765 A1 und US 2007/190306 A1 bekannt.

Die Polymere der erfindungsgemäßen Polymerzusammensetzung können verstärkt, zum Beispiel faserverstärkt, sein, wobei glasfaser- (GF) oder kohlenstofffaserverstärkte (CF)

Polymere bevorzugt sind. Sofern die Zusammensetzung als Haftvermittlerschicht zwischen Metall und Kunststoff fungiert, enthält die Zusammensetzung vorzugsweise keine Fasern.

Polyamide stellen bevorzugte Polymere der erfindungsgemäßen Polymerzusammensetzung dar. Das Polyamid wird vorzugsweise ausgewählt aus der Gruppe umfassend Homopolyamide des Aminocarbonsäure-Typs, Homopolyamide des Diamin-Dicarbonsäure-Typs, Copolyamide und Mischungen daraus. Das Polyamid kann aliphatisch oder teilaromatisch sein.

**Weitere Bestandteile**

Die erfindungsgemäßen Zusammensetzungen können Zusatzstoffe enthalten. Diese dienen beispielsweise der besseren Verarbeitung der Polymerzusammensetzung, Farbgebung oder Einstellung sonstiger Materialeigenschaften. Die Polymerzusammensetzung kann Füllstoffe wie Talkum oder Kreide enthalten, wobei es bevorzugt ist, dass keine Füllstoffe enthalten sind. Die Zusammensetzung kann weiterhin Zusatzstoffe enthalten wie beispielsweise Stabilisatoren, Schlagzähmodifikatoren, Fließhilfsmittel und Pigmente. Zudem können organische Lösemittel enthalten sein. Derartige Zusatzstoffe können kumulativ in Anteilen von 0 bis 20 Gew.-%, vorzugsweise 0 bis 10 Gew.-%, enthalten sein.

**Herstellung Zusammensetzung**

Die Polymerzusammensetzung wird aus den einzelnen Bestandteilen vorzugsweise durch Schmelzmischen in einem knetenden Aggregat hergestellt. Das haftvermittelnde Additiv und gegebenenfalls weitere Zusatzstoffe können jeweils für sich oder zusammen als Mischung direkt dem Polymer-Granulat oder der Polymer-Schmelze zugegeben werden. Gegebenenfalls wird die Polymerzusammensetzung aus den einzelnen Komponenten erst kurz vor der Weiterverarbeitung erzeugt, zum Beispiel in einem Extruder einer Anlage zur Folienerzeugung. Die Komponenten können ebenso als Mischung in Form eines Masterbatches zugegeben werden.

Die verwendeten haftvermittelnden Additive, die im allgemeinen eine Viskosität zwischen 10 und 10.000 mPas aufweisen (Brookfield RV-DV II+ Pro, Spindel RV3, 100 rpm, 21 °C), können entweder mit einer Flüssigdosierung dem Polyamid bei der Herstellung der Polymerzusammensetzung zugesetzt werden oder die Additive werden als Masterbatch in fester Form bereitgestellt. Letzteres ist bevorzugt, da die Verarbeitung flüssiger Komponenten in Extrudern besonders

bei Konzentrationen oberhalb von 10% technisch nur aufwendig realisierbar ist.

**Folie**

Ein weiterer Gegenstand der Erfindung ist eine Folie enthaltend die erfindungsgemäße Zusammensetzung. Die Folie weist vorzugsweise eine mittlere Dicke zwischen 10 μm und 700 μm, bevorzugt von 10 μm bis 600 μm auf.
Für die Herstellung von Folien aus der erfindungsgemäßen Polymerzusammensetzung kommen unterschiedlichen Verfahren in Frage:

Bei Gießverfahren wird die Polymerzusammensetzung im Extruder (meist Einschneckenextruder) verflüssigt und über eine Breitschlitzdüse auf eine laufende und wassergekühlte Walze gegossen, wodurch bei hoher Produktionsgeschwindigkeit Folien mit Schichtdicken von 25 bis 700 μm, bevorzugt von 25 μm bis 600 μm herstellbar sind.

Beim Blasfolienverfahren wird das Extrudat ebenfalls im Extruder verflüssigt (meist Einschneckenextruder) und durch ein ringförmige vertikale Düse mit Hilfe eines Luftstroms eine Schmelzschlauch der Polymerzusammensetzung erzeugt, die dann im Luftstrom abgekühlt wird. Die üblichen Schichtdicken liegen zwischen 10 und 500 μm.
Die erfindungsgemäßen Folien weisen vorzugsweise eine Dicke von 10 μm bis 700 μm, bevorzugt von 10 μm bis 600 μm, besonders bevorzugt von 15 μm bis 500 μm, weiter bevorzugt von 20 μm bis 400 μm, mehr bevorzugt von 30 μm bis 300 μm, weiter mehr bevorzugt von 50 bis 200 μm und insbesondere bevorzugt von 75 bis 150 μm auf. Die Dicke der Folien kann nach dem Stand der Technik mit unterschiedlichen Methoden bestimmt werden, z.B. auf mechanische Weise mit z.B. mit Hilfe von Mikrometerschrauben oder z.B. auf optischem Wege mit Hilfe von Interferenzmessungen. Bevorzugt wird die Dicke der erfindungsgemäßen Folien mit Hilfe von Mikrometerschrauben, beispielsweise mit Mikrometerschrauben der Firma Mituyo, besonders bevorzugt der Bauart Bügelmessschraube, insbesondere bevorzugt mit einer Schließkraft der Schraube von 7 bis 9 Newton, bestimmt. Bei der beanspruchten Schließkraft ist eine Verletzung der Folie ausgeschlossen, wodurch eine hohe Reproduzierbarkeit der Messwerte gewährleistet wird.
Erfindungsgemäße Folien weisen bevorzugt Anreicherungszonen der haftvermittelnden Additive nach Formel (I) an der Grenzschicht auf. Das Auftreten dieses Effekts kann vom gewählten Additiv der Formel (I) abhängen. Der Fachmann kann ein geeignetes Additiv durch Vorversuche auswählen, wobei die Art und Anzahl der Substituenten, die Kettenlänge, die Reste (II) bis (IV) und der Anteil des Additivs in der Polymerzusammensetzung variiert werden können.
Die Konzentration der haftvermittelnden Additive ist damit in den Grenzschichten (3a) gegenüber dem Bulk (3b) erhöht (vgl. Fig. 3). Die Bestimmung derartiger Anreicherungszonen wird mit Hilfe von x-ray photoelectron spectroscopy (XPS) durchgeführt. Diese Methode ermöglicht die elementabhängige Konzentrationsbestimmung in Oberflächenschichten, im Ergebnis erhält man ein Konzentrations-Tiefen-Profil des Elementes Silizium.
Folien mit Anreicherungszonen sind besonders vorteilhaft, da die Konzentration des haftvermittelnden Additives als kostentreibende Komponente der Folie auf diese Weise gesenkt werden kann.
Bevorzugt ist die Konzentration der haftvermittelnden Additive in den Anreicherungszonen mindestens 3 mal, bevorzugt mindestens 4 mal, weiter bevorzugt mindestens 5 mal, mehr bevorzugt mindestens 6 mal, weiter mehr bevorzugt mindestens 7 mal, 8 mal, 9 mal und insbesondere mindestens 10 mal gegenüber dem Bulk erhöht.
Bevorzugt weisen die erfindungsgemäßen Folien Anreicherungszonen mit einer Schichtdicke von 0,1 bis 4000 nm, bevorzugt von 0,5 bis 400 nm, weiter bevorzugt von 1 bis 100 nm, mehr bevorzugt von 2 bis 50 nm, besonders bevorzugt von 2,5 bis 20 nm und insbesondere bevorzugt von 3 bis 10 nm auf.
Insbesondere bevorzugt sind Folien mit einer Dicke der Anreicherungszone von 2 bis 20 nm und mit einer Anreicherungskonzentration, die mindestens 5 mal gegenüber der Bulkkonzentration erhöht ist.
Die erfindungsgemäßen Folien müssen nicht notwendigerweise klar sein, vielmehr ist es möglich, dass sie trübe oder opak erscheinen. Diese optischen Eigenschaften sind kein Qualitätskriterium.
Mit den Verfahren können auch Mehrschichtfolien gefertigt werden. Hier besteht zumindest eine der äußeren Schichten der Mehrschichtfolie aus der erfindungsgemäßen Polymerzusammensetzung. Es sind also beispielsweise Schichtformationen in folgender Art und Weise darstellbar:

1. Schicht = erfindungsgemäße Polymerzusammensetzung bestehend aus einem Polymer und mindestens einem haftvermittelnden Additiv
2. Schicht = Polymer ohne haftvermittelndes Additiv
3. Schicht = erfindungsgemäße Polymerzusammensetzung bestehend aus einem Polymer und mindestens einem haftvermittelnden Additiv.

Die Schicht ohne haftvermittelndes Additiv kann mehrfach übereinander angeordnet sein.

**Kunststoffhalbzeug**

Aus dem additivierten Polymer der erfindungsgemäßen Polymerzusammensetzung kann unter Anwendung bekannter Verfahren (zum Beispiel Schmelz-, Folien- oder Pulverimprägnierung im Doppelbandpressverfahren, Intervallheißpressen) ein Kunststoffhalbzeug hergestellt werden.

Eine weitere Möglichkeit der Herstellung eines randschichtmodifizierten Faserverbundhalbzeugs ohne vorherige Folienherstellung ist das Doppelbandpressverfahren. Hierbei werden eine oder mehrere Lagen eines trockenen (nicht imprägnierten) endlosfaserverstärkten Faserverbundhalbzeugs in eine Doppelbandpresse eingezogen. Im Zwickelbereich zwischen den Einzellagen wird - analog zum Schmelze-Direkt-Verfahren - das Matrixmaterial vorzugsweise über eine Breitschlitzdüse auf das trockene Textil aufgebracht.

Halbzeuge umfassen auch übliche Formteile, die beispielsweise durch Urformen wie beispielsweise Spritzgießen, Pressen oder Extrusion erhältlich sind.

Das Kunststoffhalbzeug stellt einen weiteren Gegenstand der Erfindung dar. Das Halbzeug umfasst mindestens ein Polymer, ausgewählt aus Polyamiden, ihren Mischungen und Polyaryletherketonen (Kunststoffwerkstoff). Zumindest ein Teil der Oberfläche des Kunststoffhalbzeugs wird mit zumindest einer erfindungsgemäßen Polymerzusammensetzung beschichtet oder imprägniert.

Dabei ist es ausreichend, wenn das Halbzeug nur an den Oberflächenbereichen, die eine stoffschlüssige Anbindung an ein metallisches Bauteil darstellen sollen, mit erfindungsgemäßen Zusammensetzungen beschichtet sind. Die Zusammensetzung muss demnach weder im gesamten Volumen des Kunststoffhalbzeugs noch im gesamten oberflächennahen Bereich vorhanden sein.

Das Polyamid wird vorzugsweise ausgewählt aus der Gruppe umfassend Homopolyamide des Aminocarbonsäure-Typs, Homopolyamide des Diamin-Dicarbonsäure-Typs, Copolyamide und Mischungen daraus. Das Polyamid kann aliphatisch oder teilaromatisch sein.

Der Kunststoffwerkstoff und das Polymer der Polymerzusammensetzung können gleich oder verschieden sein. Vorzugsweise sind die Polymere identisch oder basieren auf den gleichen Monomeren. Der Kunststoffwerkstoff und das Polymer der Zusammensetzung sind vorzugsweise Polyamide, und bevorzugt ein Homopolyamid. Der Kunststoffwerkstoff kann somit das Additiv der Formel (I) enthalten.

Der Kunststoffwerkstoff ist vorzugsweise faserverstärkt (faserverstärktes Polymer), so dass das Kunststoffhalbzeug als Faserverbundhalbzeug bezeichnet werden kann. Vorzugsweise enthält zumindest eine außenliegende Schicht des Faserverbundhalbzeugs das haftvermittelnde Additiv. Sofern lediglich die Außenschicht(en) das Additiv enthalten, ist es bevorzugt, dass die Trockenschichtdicken 10 bis 50 % höher ausfallen als bei den Schichten, die das Additiv nicht enthalten. Für die Herstellung der Faserverbundhalbzeuge werden die erfindungsgemäßen Zusammensetzungen vorzugsweise in Form einer Folie oder als Pulver aufgebracht. Dabei sollte das Pulver eine genügend hohe Feinheit haben, wobei nicht so sehr die absolute mittlere Teilchengrößenverteilung in Form des d50-Wertes entscheidend ist, In einem ersten Schritt kann eine Mahlung mit einer Schlagmühle der Firma Retsch, DE, durchgeführt werden, die über einen 100 $\mu$m-, 200 $\mu$m- oder 500 $\mu$m-Sieb bereits die Hauptfraktion des Pulvers mit einer ausreichend hohen Feinheit generiert und dann nur geringe Grobanteile durch eine echte Siebung abgetrennt werden müssen. Die Siebung des vermahlenen Pulvers kann im Anschluss erfolgen, wobei beispielsweise die grobe Fraktion ab 250 $\mu$m abgetrennt wird, um die feineren Partikel als Hauptfraktion zu erhalten. Noch besser ist die Abtrennung der Partikel oberhalb von 150 $\mu$m und insbesondere bevorzugt ist es nur Partikel mit weniger als 100 $\mu$m zu verwenden. Das Pulver wird dadurch durch händisches Rütteln oder über einen sogenannten Siebturm verarbeitet und die Feinanteile zur weiteren Verarbeitung abgetrennt. Geeignete metallische Siebe sind beispielsweise von der Fa. Retsch als Test Sieve mit gewünschter Maschnweite verfügbar.

Die faserverstärkten Polymere enthalten formstabilisierende Fasern umfassend Kunststoff, Kohlenstoff oder Glasfasern, wobei Glasfasern (GF) oder Kohlenstofffasern (CF) bevorzugt und Glasfasern besonders bevorzugt sind. Die formstabilisierenden Fasern sind Einzelfasern oder Faserverbünde, die zu Geweben oder Schichten mit unterschiedlicher Ausrichtung der Fasern verarbeitet sein können, dies kann z.B. durch Wicklung von Einzelfasern oder Fasersträngen, wie z.B. Faserbündeln geschehen.

Die Fasern lassen sich folgendermaßen nach der Faserlänge unterteilen:

> Kurzfasern weisen eine Länge von etwa 0,1 bis 1 mm auf. Fasern mit einer Länge von etwa 1 bis 50 mm werden als Langfasern bezeichnet. Beträgt die Länge mehr als 50 mm, werden die Fasern als Endlosfasern bezeichnet. Als Länge wird die anzahlgemittelte mittlere Faserlänge in der Matrix nach der Faserverbundwerkstoff-Herstellung nach DIN ISO 22314 angesehen.

Derartige Fasern können in den faserverstärkten Polymeren enthalten sein.

In der erfindungsgemäßen Polymerzusammensetzung können 0 bis 49,7 Gew.-% Fasern, bezogen auf das Gesamtgewicht der Polymerzusammensetzung, enthalten sein. Vorzugsweise sind 0 bis 40 Gew.-% und bevorzugt 0

bis 30 Gew.-% Fasern enthalten. In einer faserhaltigen Zusammensetzung können mindestens 10 Gew.-% und vorzugsweise mindestens 25 Gew.-% Fasern enthalten sein.

Die Kunststoffwerkstoffe können eine Dicke von 0,1 bis 10 mm, vorzugsweise 0,5 bis 10 mm, bevorzugt von 0,7 bis 8 mm, besonders bevorzugt von 1,0 bis 6 mm aufweisen.

Schließlich richtet sich ein weiterer Aspekt der Erfindung auf ein Verfahren zur Herstellung eines solchen Kunststoffhalbzeugs. Das Verfahren umfasst die Schritte:

a) Bereitstellen eines Kunststoffwerkstoffs und
b) Aufbringen mindestens einer Schicht der erfindungsgemäßen Polymerzusammensetzung.

Die Zusammensetzungen können kontinuierlich oder diskontinuierlich mittels Elektrotauchlackieren, elektrostatischen Sprühverfahren, Wirbelsintern, Walzen (zum Beispiel Coil Coating), Gießen, Spritzen, Spritzgießen und Sprühen, Laminieren, (Heiß-)Pressen, (Co-) Extrusion (bspw. als Folie) appliziert werden, wobei Sprüh-Verfahren und Walzenauftragsverfahren sowie der Folienauftrag bevorzugt sind. Hierbei können die erfindungsgemäßen Zusammensetzungen ein- oder beidseitig, lokal oder vollflächig aufgebracht werden. Die Trockenschichtdicken der Zusammensetzungen können 10 bis 1000 μm, vorzugsweise 20 bis 250 μm und bevorzugt 30 bis 150 μm, betragen. Im Walzenverfahren sind Schichtdicken von 5 μm bis 250 μm, insbesondere 10 μm bis 50 μm, bevorzugt.

Demzufolge kann die erfindungsgemäße Zusammensetzung beispielsweise in Form wässriger oder lösemittelhaltiger Lacke, als Pulver oder als Folie aufgebracht werden.

Sofern die Zusammensetzung als Folie aufgebracht wird, wird die Folie im Fertigungsprozess des Kunststoffhalbzeugs vorzugsweise nach dem Film-Stacking-Verfahren oder dem Schmelze-Direkt-Verfahren oder durch Kaschieren verarbeitet, wobei Kaschieren bevorzugt ist. Hierbei kann Rückgriff auf bekannte Verfahren zur Folienherstellung genommen werden, wie dem Foliengießverfahren (z. B. dem Castverfahren) oder dem Folienblasverfahren. Die Folie hat vorzugsweise eine Foliendicke im Bereich von 10 μm bis 700 μm, bevorzugt von 10 μm bis 600 μm, mehr bevorzugt von 30 bis 300 μm und insbesondere bevorzugt von 50 bis 150 μm. Die erfindungsgemäße Polymerzusammensetzung eignet sich hervorragend zur Folienherstellung.

Nach einer Variante kann die Folie dabei durch Kaschieren direkt auf einen Rohling des Kunststoffhalbzeugs aufgetragen werden.

Beim Film-Stacking-Verfahren werden dabei übereinandergelegte Bahnen aus Fasermaterial (beispielsweise Gelege, Gewebe, Vliesstoff) und polymerem Matrixmaterial (beispielsweise in Form einer Folie) kontinuierlich einem beheizten Werkzeug, der sogenannten Imprägnierstrecke, zugeführt und thermisch verschmolzen. Zumindest eine der beiden äußeren Bahnen ist dabei eine Schicht, beispielsweise eine Folie, die aus der erfindungsgemäßen Polymerzusammensetzung hergestellt wurde.

Figur 1 ist exemplarisch eine Abfolge alternierender Lagen aus den verschiedener Materialien zu entnehmen, wie sie zur Herstellung eines Faserverbundhalbzeugs nach dem Film-Stacking-Verfahren Verwendung finden kann. Sie umfassen Lagen aus Matrixfolie 40, beispielsweise aus Polyamid, und Lagen eines Verstärkungshalbzeugs 42, welche alternierend zwischen den Matrixfolien 40 angeordnet. Das Verstärkungshalbzeug 42 beinhaltet die zur Verstärkung dienenden Fasern. Mögliche Fasertypen sind dabei beispielsweise Glasfasern, Kohlenstofffasern oder Aramidfasern. Mögliche Verstärkungshalbzeugtypen umfassen Gelege und Gewebe. Schließlich kann im außen liegenden Bereich (Randbereich) des dargestellten Schichtstapels jeweils eine modifizierte Randfolie 44 aus der erfindungsgemäßen Polymerzusammensetzung bereitgestellt werden (randschichtmodifiziert).

Auch beim sogenannten Schmelze-Direkt-Verfahren ist zumindest eine der außenliegenden Bahnen eine Folie der erfindungsgemäßen Polymerzusammensetzung. Die polymere Matrix, die letztendlich die Fasern umgibt, wird bei dieser Verfahrensvariante als Schmelze direkt in das temperierte Werkzeug der Imprägnierstrecke eingebracht. Das Verfahren kann auch für Pulver eingesetzt werden.

Beim Schmelze-Direkt-Verfahren werden Lagen aus Verstärkungshalbzeug 42 und modifizierter Randfolie 44 in der in Figur 2 dargestellten Abfolge der Intervall-Presseinheit zugeführt. Darüber hinaus wird über eine Plastifiziereinheit eine Kunststoffschmelze 46 aus Polyamid zugeführt.

Der in den Figuren 1 und 2 dargestellte Aufbau, insbesondere Schichtabfolge und Anzahl der Lagen aus Verstärkungshalbzeug 42 und Matrixfolie 40 ist variabel und kann den jeweiligen Erfordernissen angepasst werden. Für die Zwecke der Erfindung von Bedeutung ist wesentlich, dass einseitig oder beidseitig eine Randschichtmodifikation des Faserverbundhalbzeugs durch Kaschieren mit der modifizierten Randfolie 44 aus der erfindungsgemäßen Polymerzusammensetzung erfolgt.

Zur Herstellung des endfertigen Kunststoffhalbzeugs schließen sich gegebenenfalls weitere Prozessteilschnitte, wie Konfektionierung, optional Vorformung und dergleichen an.

**Hybridbauteile**

In einer ersten Ausführungsform eines erfindungsgemäßen Kunststoff-Metall-Hybridbauteils sind mindestens ein Metall und mindestens eine erfindungsgemäße Polymerzusammensetzung umfasst. Die erfindungsgemäße Zusammensetzung fungiert hierbei als Kunststoff des Hybridbauteils. In dieser Ausführungsform ist das Additiv der Formel (I) im Kunststoff des Hybridbauteils integriert.

In einer zweiten Ausführungsform eines erfindungsgemäßen Kunststoff-Metall-Hybridbauteils sind mindestens ein Metall und mindestens ein erfindungsgemäßes Kunststoffhalbzeug umfasst. Das Kunststoffhalbzeug kennzeichnet sich durch mindestens eine, vorzugsweise eine, Beschichtung der erfindungsgemäßen Polymerzusammensetzung, die als Haftvermittler zwischen Kunststoffhalbzeug und Metall fungiert.

In einer dritten Ausführungsform eines erfindungsgemäßen Kunststoff-Metall-Hybridbauteils sind mindestens ein Metall, das mit der erfindungsgemäßen Polymerzusammensetzung, die als Haftvermittler zwischen Kunststoffhalbzeug und Metall fungiert, beschichtet ist, und ein Kunststoffwerkstoff umfassend ein Polymer, ausgewählt aus Polyamiden, ihren Mischungen und Polyaryletherketonen.

Die erfindungsgemäße Polymerzusammensetzung als Kunststoff des Hybridbauteils, der Kunststoffwerkstoff ohne erfindungsgemäße Zusammensetzung und das Kunststoffhalbzeug des Hybridbauteils werden gemeinsam als Kunststoffkomponente des Hybridbauteils bezeichnet.

Der metallische Grundkörper eines Hybridbauteils wird stoffschlüssig mithilfe des haftvermittelnden Additivs an die Kunststoffkomponente gebunden. Die Kunststoffkomponente kann im Weiteren mittels Thermoplastpressen auf ein Metall oder ein metallisches Halbzeug aufgepresst beziehungsweise eingeformt werden. Das Verfahren stellt einen weiteren Gegenstand der Erfindung dar.

Im Falle der ersten oder dritten Ausführungsform eines erfindungsgemäßen Kunststoff-Metall-Hybridbauteils ist es zudem möglich, die Kunststoffkomponente, beispielsweise die Polymerzusammensetzung, durch einen Spritzgieß- oder Extrusionsprozess oder durch Heißpressen auf das Metall aufzubringen und das Metall mit der Zusammensetzung physikalisch und/oder chemisch zu verbinden.

Im Falle der zweiten Ausführungsform kann das Kunststoffhalbzeug bereitgestellt und mittels üblicher Verfahren wie Heißpressen, Schweißen oder Prägen zusammengefügt werden.

Anschließend kann die Kombination aus Metall und Kunststoff für 5 min bis 70 min, vorzugsweise 10 min bis 60 min, bei 120 °C bis 450 °C, vorzugsweise 150 °C bis 230 °C zur Steigerung von Verbundhaftung und Vernetzungsgrad einer Wärmebehandlung (tempern) unterzogen werden. Hierdurch wird ein stoffschlüssiger Verbund der Zusammensetzung zum Metall erreicht. Derartig erhaltende Hybridbauteile weisen eine dauerhafte Verbindung zwischen dem Metall, das vorbeschichtet sein kann, und dem Kunststoff auf und zeigen eine hohe mechanische und dynamische Belastbarkeit. Die Zusammensetzungen werden somit thermisch gehärtet. Dieses Verfahren stellt einen weiteren Gegenstand der Erfindung dar.

Die genannten Temperaturen sind derart einzustellen, dass eine Zersetzung der eingesetzten Materialien unterbleibt. Dies kann der Fachmann mittels einfacher Vorversuche ermitteln.

Die Materialien aus der Kunststoffkomponente und dem Metall sind durch die Beschichtung einer Zusammensetzung zumindest teilweise miteinander verbunden.

Zwischen der Kunststoffkomponente und dem Metall kann darüber hinaus eine weitere Schicht der erfindungsgemäßen Zusammensetzung als Haftvermittler eingebracht sein.

Die erfindungsgemäßen Hybridbauteile können darüber hinaus mit einem oder mehreren Werkstoffen C verbunden sein. Die weiteren Werkstoffe C können mittels Form-, Kraft- oder Stoffschluss mit den erfindungsgemäßen Hybridbauteilen verbunden sein, wobei ggf. eine erfindungsgemäße Zusammensetzung oder ein Schmelzklebstoff auf Copolyamidbasis als Haftvermittler eingesetzt werden kann.

Der Werkstoff C kann ausgewählt werden aus Kunststoffen, Metallen, keramischen Massen, Holz, Glas, Verbundwerkstoffen, textilen Fasern und aus textilen Fasern hergestellten Fertigfabrikaten. Bevorzugte Werkstoffe C sind Kunststoffe, Metalle und Faserverbundwerkstoffe.

Ein weiterer Gegenstand der Erfindung ist ein Verfahren zur Herstellung der zuvor beschriebenen Hybridbauteile. Hierbei wird das Metall mit der Kunststoffkomponente per Stoffschluss wie oben beschrieben verbunden.

Sofern ein Werkstoff C zur Herstellung eines erweiterten Hybridbauteils zum Einsatz kommt, kann zunächst ein Hybridbauteil hergestellt werden. Anschließend kann der Werkstoff C auf das Hybridbauteil aufgebracht bzw. aufgelegt und mit dem Hybridbauteil verbunden werden. Alternativ können der Werkstoff C, das Metall und die Kunststoffkomponente gemeinsam (in einem Schritt) zur Herstellung des erweiterten Hybridbauteils verbunden werden.

Während der Herstellung des Hybridbauteils oder des erweiterten Hybridbauteils können verschiedene Fertigungsschritte wie Urformen, Umformen oder Spanen miteinander kombiniert und in einem Prozessschritt (integrative Fertigung) durchgeführt werden.

Ein weiterer Gegenstand der Erfindung ist die Verwendung der erfindungsgemäßen Polymerzusammensetzung als Haftvermittler, insbesondere für Kunststoffhalbzeuge. Darüber hinaus kann die Zusammensetzung als Haftvermittler

für Hybridbauteile umfassend Metall und die Polymerzusammensetzung als Kunststoffkomponente oder Metall und ein Kunststoffhalbzeug verwendet werden. Weiterhin kann die Polymerzusammensetzung in Folienform (als Folie) verwendet werden.

Die erfindungsgemäßen Hybridbauteile finden zum Beispiel Anwendung im Maschinen- und Anlagenbau, Fahrzeugbau, in der Luftfahrtindustrie, im Schienenbau, in der Elektronik oder der Elektrotechnik. Typische Anwendungen sind im Bereich des Automobilinterieurs, der Stoßfänger, der tragenden Karosseriestrukturen, als Rahmen- und Karosserieteile wie Frontendträger, Tür-, Dach-, Boden- oder Fahrwerkskomponenten oder als Elektronikgehäuse zu finden. Rahmen, Profile, Fassadenelemente oder Führungsleisten von Fenstern und Türen im Bereich Hausbau und Architektur sind ebenso geeignete Verwendungsgebiete.

Homopolyamide

Bevorzugte Polyamide (PA) der Polymerzusammensetzung und des Faserverbundwerkstoffs werden ausgewählt aus der Gruppe bestehend aus Polyamid 6, Polyamid 6.6, Polyamid 610, Polyamid 612, Polyamid 613, Polyamid 614, Polyamid 106, Polyamid 1010, Polyamid 1012, Polyamid 1212, Polyamid 11, Polyamid 12, Polyphthalamiden oder Mischungen auf Basis dieser Polyamide. Besonders bevorzugte Polyamide sind ausgewählt aus Polyamid 6, Polyamid 6.6, Polyamid 610, Polyamid 612, Polyamid 1010, Polyamid 12 sowie deren Mischungen.

Zu Hompolyamiden zählen weiterhin optisch transparente Polyamide. Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4-und 2,4,4-Trimethylhexamethylendiamins, aus Dodecandisäure und dem Isomerengemisch des 3-,3'-Dimethyl-4,4'-bis(aminocyclohexyl)-methans, aus Laurinlactam, Isophthalsäure und dem Isomerengemisch des 3-,3'-Dimethyl- 4,4'-bis(aminocyclohexyl)-methans oder aus Tetradecandisäure und dem Isomerengemisch des 3-,3'-Dimethyl- 4,4'-bis(aminocyclohexyl)-methans. Derartige Polyamide werden beispielsweise in DE-A-102007062063 oder WO-A-2008025729 beschrieben. Optisch transparente Polyamide werden beispielsweise unter den Handelsnamen Trogamid (Evonik, Deutschland), Grilamid (EMS-Chemie, Deutschland) oder Durethan (Lanxess, Deutschland) angeboten.

Copolyamide

Das Copolyamid ist aus Amid-Monomeren und Comonomeren herstellbar. Durch die Comonomere werden vorzugsweise Copolyamide erhalten, die einen Schmelzpunkt zwischen 95 °C und 175 °C aufweisen.

Die Amid-Monomeren sind vorzugsweise ausgewählt sind aus der Gruppe bestehend aus Laurinlactam, Aminoundecansäure oder Mischungen daraus. Copolyamide auf Basis von Laurinlactam sind besonders bevorzugt.

Die Comonomere werden vorzugsweise ausgewählt aus aliphatischen oder cycloaliphatischen Diaminen, aliphatischen oder cycloaliphatischen Dicarbonsäuren, Lactamen und Mischungen daraus. Die Comonomere enthalten, unabhängig voneinander, vorzugsweise 4 bis 18 C-Atome. Geeignete Dicarbonsäuren sind beispielsweise Adipinsäure, Sebazinsäure oder Dodecandisäure. Geeignete Diamine stellen beispielsweise Hexamethylendiamin, Decamethylendiamin oder Dodecamethylendiamin dar. Lactame wie Caprolactam können ebenfalls als Comonomer eingesetzt werden.

Bevorzugte Comonomere sind Caprolactam und ein Polymer aus Adipinsäure und Hexamethylendiamin, vorzugsweise in einem Massenverhältnis von 1:1.

Durch einen Überschuss an Amingruppen der Diamine resultieren Copolyamide mit reaktiven Aminoendgruppen.

Die Copolyamide weisen vorzugsweise Aminzahlen von 75 bis 400 mmol/kg auf.

Das gewichtsmittlere Molekulargewicht der Copolyamide ist vorzugsweise in einem Bereich von 15000 bis 70000 g/mol anzufinden (gemessen mittels Gelpermeationschromatographie (GPC) gegen einen Polystyrolstandard). Die relative Lösungsviskosität beträgt vorzugsweise 1,2 bis 1,8 (Bestimmung nach ISO 307).

Die Copolyamide können in den erfindungsgemäßen Zusammensetzungen in Lösung, in Dispersion oder in Pulverform eingesetzt werden, wobei die Pulverform bevorzugt ist. Ein geeignetes Lösemittel ist beispielsweise m-Kresol.

Die Pulverform kann beispielsweise durch Vermahlen erhalten werden, wobei der Korndurchmesser vorzugsweise < 200 $\mu$m, bevorzugt < 100 $\mu$m und besonders bevorzugt < 70 $\mu$m ist (Siebanalyse).

In einer bevorzugten Ausführungsform der Erfindung sind neben dem Copolyamid mindestens eine Epoxidkomponente und mindestens ein blockiertes Polyisocyanat enthalten.

Die Epoxidkomponente ist vorzugsweise in einem Anteil von 2,5 bis 10 Gew.-%, bevorzugt 4 bis 6 Gew.-%,

jeweils bezogen auf das Gesamtgewicht des Copolyamids, enthalten.

Der Anteil an blockiertem Polyisocyanat beträgt vorzugsweise 2,5 bis 15 Gew.-%, bevorzugt 4 bis 6 Gew.-%, jeweils bezogen auf das Gesamtgewicht des Copolyamids.

Typischerweise weist die Epoxidkomponente einen Epoxy-Index von 1-2 Eq/kg auf. Das Epoxid-Äquivalentgewicht der eingesetzten Epoxidharze kann zwischen 400 bis 4000 g/mol, vorzugsweise 700 bis 3000 g/mol und bevorzugt zwischen 875 und 1000 g/mol liegen (bestimmt nach SMS 2026).

Der Anteil an OH-Gruppen geeigneter Epoxidharze beträgt vorzugsweise 2000 bis 4500 mmol/kg, bevorzugt 2300 bis 4000 mmol/kg (Methode SMS 2367).

Als Epoxidkomponente können beispielsweise Verbindungen auf Basis von Diolen, Polyolen oder Dicarbonsäuren eingesetzt werden, wobei Diole bevorzugt und entsprechende Phenol-Diol-Derivate besonders bevorzugt sind. Ganz besonders bevorzugte Phenol-Diol-Derivate sind Bisphenole, insbesondere Bisphenol A. Die Epoxidkomponente wird üblicherweise erhalten durch Umsetzung mit Epichlorhydrin.

Geeignete Epoxidharze haben eine Dichte von 1 bis 1,3 kg/L, bevorzugt 1,15 bis 1,25 kg/L (25 °C; bestimmt nach ASTM D792). Die Glasübergangstemperatur (Tg) kann 20 °C bis 100 °C betragen, vorzugsweise 25 °C bis 90 °C, bevorzugt 40 °C bis 60 °C und besonders bevorzugt 45 bis 55 °C (Bestimmung nach ASTM D3418). Der Schmelzbereich liegt üblicherweise im Bereich von 45 °C bis 150 °C (nach DIN 53181). Geeignete Epxidharze sind beispielsweise unter den Bezeichnungen EPIKOTE Resin wie etwa EPIKOTE Resin 1001 oder 1009 der Hexion Specialty Chemicals, Inc. erhältlich.

Das Copolyamid kann weiterhin Härter wie Dicyandiamid (DCD), vorzugsweise in Anteilen von 3 bis 6 Gew.-%, bezogen auf das Gesamtgewicht an Epoxidharz, enthalten. Zur Härtungsbeschleunigung können Harnstoffderivate wie Monuron oder Fenuron zugesetzt werden, wodurch die Härtungstemperaturen abgesenkt bzw. die Härtungszeiten verkürzt werden können.

Die blockierte Polyisocyanatkomponente kann aromatisch, aliphatisch oder cycloaliphatisch sein, wobei aliphatische oder cycloaliphatische Polyisocyanate bevorzugt sind. Blockierungsmittel für Isocyanate wie Oxime, Phenole oder Caprolactam sind dem Fachmann bekannt. Bevorzugt liegt die Polyisocyanatkomponente als Uretdion vor, um blockiert zu sein. Typische Beispiele werden unter der Bezeichnung VESTAGON von Evonik Industries, Deutschland, vertrieben.

Die Zusammensetzung kann selbst- oder fremdvernetzende Bindemittel enthalten (zu dem Begriff "Bindemittel" vgl. Römpp Lexikon Lacke und Druckfarben, Georg Thieme Verlag, Stuttgart, New York, 1998, Bindemittel, Seiten 73 und 74). Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln komplementäre reaktive funktionelle Gruppen enthalten sind, die miteinander reagieren und so zu einer Vernetzung führen. Oder aber die Bindemittel enthalten reaktive funktionelle Gruppe die "mit sich selbst" reagieren. Als fremdvernetzend werden dagegen solche BindemittelSysteme bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, Härtung, Seiten 274 bis 276, insbesondere Seite 275, unten, verwiesen.

Die Zusammensetzung kann weiterhin elektrisch leitfähige Stoffe enthalten, die ausgewählt sind aus Graphit, Ruß, Zinkstaub oder Mischungen dieser Stoffe, wodurch elektrisch leitfähige Zusammensetzungen entstehen.

Die Hybridbauteile umfassend Beschichtungen elektrisch leitfähiger

Polymerzusammensetzungen können mit einer kathodischen Tauchlackierung (KTL) versehen werden. Hierbei kann eine Resthaftung von mindestens 20 % im Vergleich zu der Haftung vor dem KTL-Auftrag eintreten, wenn die erfindungsgemäßen Zusammensetzungen verwendet werden. Die Resthaftung beträgt üblicherweise mindestens 5 mPa bis 30 mPa (Bestimmungsmethode: siehe Beispiele). Ein Totalverlust der Haftung kann auftreten, wenn man versucht. das Hybridbauteil aus Faserverbundwerkstoffen und Metall direkt zu verpressen oder als dritte Komponente ein unmodifiziertes Polyamidmaterial für die Verbindung als Zwischenschicht verwendet.

Die Zusammensetzungen können weiterhin Farbmittel, vorzugsweise Pigmente, enthalten. Darüber hinaus können funktionelle Pigmente wie Korrosionsschutzpigmente enthalten sein.

Geeignete Copolyamide werden beispielsweise von der Firma Evonik Industries, Deutschland, unter der Bezeichnung VESTAMELT angeboten. Beispielsweise seien die Typen X1027-P1, X1038-P1, X1316-P1 und X1333-P1 genannt.

Neben dem Copolyamid können darüber hinaus Propfcopolymere aus Polyamin und polyamidbildenden Monomern wie Lactamen bzw. ω-Aminocarbonsäuren enthalten sein, wie sie in EP-A-1065236 beschrieben sind:

Beim Pfropfcopolymer liegt die Aminogruppenkonzentration bevorzugt im Bereich von 100 bis 2 500 mmol/kg.

Als Polyamin können beispielsweise folgende Substanzklassen verwendet werden:

- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise $((H_2N-(CH_2)_3)_2N-(CH_2)_3)_2-N(CH_2)_2-N((CH_2)_2-N((CH_2)_3-NH_2)_2)_2$ (DE-A-196 54 179) oder Tris(2-aminoethyl)amin, N,N-Bis(2-aminoethyl)-N',N'-bis[2-[bis(2-aminoethyl)amino]-ethyl]-1,2-ethandiamin, 3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:

  25 bis 46 % primäre Aminogruppen,
  30 bis 45 % sekundäre Aminogruppen und
  16 bis 40 % tertiäre Aminogruppen;

- Polypropylenimine.

Das Polyamin besitzt im bevorzugten Fall ein zahlenmittleres Molekulargewicht $M_n$ von maximal 20 000 g/mol, besonders bevorzugt von maximal 10 000 g/mol und insbesondere bevorzugt von maximal 5 000 g/mol (Bestimmungsmethode: siehe oben).

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam und Laurinlactam bzw. der zugehörigen ω-Aminocarbonsäuren eingesetzt. Das Molverhältnis C12/C6-Baustein liegt bevorzugt zwischen 4:1 bis 1:4. Das Massenverhältnis Copolyamid zu Pfropfcopolymer liegt bevorzugt zwischen 19:1 und 1:1.

Das funktionalisierte Polyolefin ist im einfachsten Fall polypropylenbasiert. Es eignen sich aber auch Etylen / $C_3$- bis $C_{12}$-α-Olefin-Copolymere. Als $C_3$- bis $C_{12}$-α-Olefin wird beispielsweise Propen, 1-Buten, 1-Penten 1-Hexen, 1-Octen, 1-Decen oder 1-Dodecen eingesetzt. Weiterhin können die Etylen / $C_3$- bis $C_{12}$-α-Olefin-Copolymere auch bis maximal etwa 10 Gew.-% Olefindiene wie beispielsweise Ethylidennorbornen oder 1,4-Hexadien enthalten. Als Funktionalisierung dienen bevorzugt Säureanhydridgruppierungen, die auf bekannte Weise durch thermische oder radikalische Reaktionen des Hauptkettenpolymers mit einem ungesättigten Dicarbonsäureanhydrid oder einer ungesättigten Dicarbonsäure eingebracht werden. Geeignete Reagenzien sind beispielsweise Maleinsäureanhydrid oder Itaconsäureanhydrid. Auf diese Weise werden 0,1 bis 4 Gew.-%, bezogen auf das Gesamtgewicht der funktionalisierten Polyolefine, aufgepropft, was auch zusammen mit einem weiteren Monomer wie beispielsweise Styrol erfolgen kann.

Die Verwendung von maleinsäuregepfropften Polyolefinen hat weite Verbreitung für industrielle Anwendungen gefunden, insbesondere für schlagzähe Modifikationen oder als Verträglichkeitsvermittler in Blends und mechanisch verstärkten Systemen (Polymer, 2001, 42, 3649-3655 und zitierte Literatur). Genannte Quelle beschreibt beispielhaft auch die Herstellung derartiger funktionalisierter Polyolefine.

Einen typischen Vertreter für ein funktionalisiertes Polyolefin stellt das polypropylenbasierte, säureanhydridgepfropfte Admer QB 520 E (Mitsui Chemicals) dar. Prinzipiell einsetzbar sind auch leichter fließende, mit Maleinsaure gepfropfte Polypropylene der Fa. Kometra (z.B. SCONA TPPP 8012).

Eine weitere Funktionalisierungsmöglichkeit besteht in der Schmelzemischung unfunktionalisierter Polyolefine mit reaktiven Verträglichkeitsvermittlern, die Epoxid- oder Carbonsäureanhydridgruppierungen enthalten. Typische Beispiele stellen Copolymerisate bestehend aus Ethylen, einem oder mehreren nicht reaktiven acrylischen Monomeren mit Maleinsäureanhydrid oder Glycidylmethacrylat dar. Lotader AX8900 (Arkema) stellt einen typischen Vertreter mit Glycidylmethacrylat-Einheiten dar.

Das Verhältnis Polyamid-Komponente zu Polyolefinkomponente liegt vorzugsweise zwischen 9 zu 1 und 2 zu 3.

Das zuvor beschriebene Copolyamid kann als Schmelzklebstoff fungieren.

**Polyaryletherketone**

Die Polyaryletherketone als Polymere der erfindungsgemäßen Zusammensetzung sind im Stand der Technik bekannt. Sie lassen sich durch die folgende allgemeine Struktur (IV) kennzeichnen:

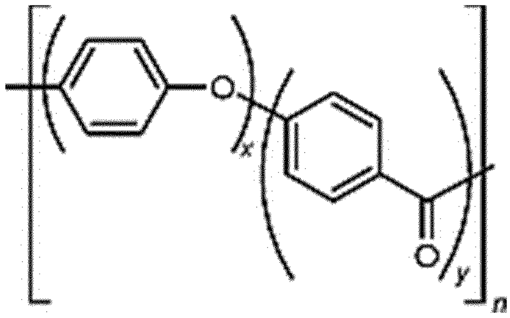
(IV),

wobei die Indices x und y unabhängig voneinander Werte zwischen 1 und 10 annehmen können.
Polyetheretherketon (PEEK) mit x = 2 und y = 1 ist besonders bevorzugt.
Die Polyaryletherketone der Formel (VI) weisen vorzugsweise ein zahlensmittleres Molekulargewicht von 10.000 bis 30.000 auf. Die Bestimmung des Molekulargewichts erfolgt mittels Gelpermeationschromatographie (GPC) gegen einen Styrol-Standard zur Kalibrierung. Die Probe wird bei 23 °C mit einem Anteil von 5 g/L in Tetrahydrofuran vorbereitet. Säule: Styrol-Divinylbenzol-Copolymer; mobile Phase: Tetrahydrofuran; Flussrate: 1 mL/min; Detektion: Brechungsindex; interner Standard: Ethylbenzol.

**Faserverstärkung**

Die Fasern können in der Matrix gerichtet oder ungerichtet, vorzugsweise gerichtet, sein. Beispiele für Faserverbundwerkstoffe umfassend gerichtete Fasern sind UD-Gelege, UD-Tapes (UD = unidirektional) oder Gewebe. Ungerichtete Fasern sind beispielsweise in Vliesen enthalten.
Die Faser-Kunststoff-Verbunde können weiterhin als Faser-Matrix-Halbzeuge vorliegen. Diese können vorimprägniert sein. Die vorimprägnierte Faser-Matrix-Halbzeuge können in Platten-, Band- oder Strangform vorliegen.
Zu den thermoplastischen Halbzeugen zählen beispielsweise glasmattenverstärkte Thermoplaste (GMT), kurz- oder langfaserverstärkte Thermoplaste (KFG bzw. LFG) oder thermoplastische preimpregnated fibres (Prepregs). Plattenförmige thermoplastische Prepregs werden auch als Organobleche bezeichnet (vgl. Tagungsband zur Fachtagung "Thermoplastische Faserverbundkunststoffe", 15.-16.05.2013 in Fürth, Carl Hanser Verlag München 2013, ISBN 978-3-446-43864-4, Seiten 5, 13 und17).
Der Faserverbundwerkstoff kann beschnitten, umgeformt oder verformt werden. Die Um- bzw. Verformung kann vor oder nach dem Auftrag der Zusammensetzung erfolgen.
Die Herstellung von Faserverbundwerkstoffen aus den zuvor beschriebenen Fasern und der Matrix ist dem Fachmann bekannt.

**Metalle**

Geeignete Metalle sind z.B. eisenhaltige Legierungen wie Stahl, Aluminium, Kupfer, Magnesium, Titan sowie Legierungen der zuvor genannten Metalle. Bevorzugte Metalle sind Stahl, Titan, Aluminium sowie Legierungen der zuvor genannten Metalle, besonders bevorzugt Stahl und Aluminium sowie Aluminium-Legierungen. Die Metalle können auch als Schaum oder in einer Wabenstruktur vorliegen.
Bevorzugte Stähle sind unlegierte Stähle oder Edelstähle. Stähle mit einem Schutzüberzug sind besonders bevorzugt. Geeignete Überzüge sind beispielsweise Überzuge aus Zink, Aluminium-Silizium, Aluminium-Zink, Zink-Aluminium, Zink-Eisen oder Zink-Magnesium, wobei Aluminium-Silizium, Zink-Aluminium und Zink bevorzugt sind. Die Zusammensetzung der Überzüge ist beispielsweise definiert in der Broschüre "Schmelztauchveredeltes Band und Blech" des Stahl-Informations-Zentrums im Stahl-Zentrum, Düsseldorf, Deutschland, Ausgabe 2010.
Vor dem Aufbringen des Faserverbundwerkstoffs, optional enthaltend das Additiv, kann das Metall beschnitten, umgeformt oder verformt werden.
Die Um- bzw. Verformung des Metalls kann vor oder nach dem Auftrag der Zusammensetzung erfolgen.
Ein weiterer Gegenstand der Erfindung ist ein Metallsubstrat, das mit mindestens einer erfindungsgemäßen Zusammensetzung beschichtet ist. Das Substrat kann z. B. ein metallisches Halbzeug oder ein metallisches Formteil

sein. Das Substrat ist vorzugsweise ein Metallband, eine Metalltafel, ein Metallprofil, ein Metallgussteil oder ein Metalldraht.

Vor der Applikation der Zusammensetzungen kann ein mechanisches Aufrauen der Oberfläche beispielsweise mittels Schleifen, Bürsten oder Sandstrahlen erfolgen.

Vor der Applikation der Zusammensetzungen kann eine Konversionsschicht zur Vorbehandlung der Oberfläche auf das Metall vollflächig oder partiell aufgebracht werden. Das Metall kann vor der Vorbehandlung gereinigt werden oder bereits metallische Schutzüberzüge aufweisen. Die Metallreinigung ist dem Fachmann bekannt.

Das Aufrauen und die Konvertierung können miteinander kombiniert werden.

Die Vorbehandlung kann mit Konvertierungsmitteln erfolgen. Die Konvertierungsmittel werden üblicherweise als wässrige Lösungen eingesetzt. Als Konvertierungsmittel kommen handelsübliche Passivierungsmittel und Produkte für die Konversionsbehandlung in Frage, wie zum Beispiel Phosphatierungsmittel wie Zinkphosphatierungsmittel, Eisenphosphatierungsmittel sowie phosphorsäurehaltige Lösungen enthaltend Titanate oder Zirconate. Chromatierungsmittel sind ebenfalls technisch möglich, sie sind jedoch auf Grund ihrer gesundheitsgefährdenen Eigenschaften weniger bevorzugt.

Weiterhin kann die Konversionsschicht erhalten werden durch eine flammenpyrolytische Abscheidung von amorphem Silicat auf der Metalloberfläche. Die zu behandelnde Oberfläche wird durch den oxidierenden Bereich einer Gasflamme geführt, in welche eine siliciumhaltige Substanz, der Precursor, eindosiert ist. Dieser verbrennt und der Rückstand scheidet sich als amorphes Silicat als festhaftende Schicht in Schichtdicken von etwa 20 bis 40 nm auf der Oberfläche ab.

Zur Behandlung einer Oberfläche wird aus einem Arbeitsgas ein Plasmastrahl oder aus einem Brenngas ein Flammstrahl erzeugt, mit dem die Oberfläche bestrichen wird, wobei mindestens ein Precursormaterial dem Arbeitsgas und/ oder dem Plasmastrahl oder dem Brenngas und/oder dem Flammstrahl zugeführt und im Plasmastrahl oder Flammstrahl zur Reaktion gebracht wird, wobei mindestens ein Reaktionsprodukt mindestens eines der Precursoren auf der Oberfläche und/oder auf mindestens einer auf der Oberfläche angeordneten Schicht abgeschieden wird. Ein derartiges Verfahren ist beispielsweise in DE-A-102009042103 beschrieben.

Sofern die Metalloberfläche eine Silicat-Oberfläche, beispielsweise gewonnen durch flammenpyrolytische Abscheidung von amorphem Silicat, aufweist, ist ein Additiv umfassend den Rest der Formel (II) oder (IV) oder eine Mischung der Reste (III) und (IV) bevorzugt, wobei eine Mischung der Reste (III) und (IV) besonders bevorzugt ist.

Im Falle einer phosphatierten Metalloberfläche sind Additive mit den Resten (II) oder (III) oder eine Mischung der Reste (III) und (IV) bevorzugt, wobei (II) oder eine Mischung der Reste (III) und (IV) besonders bevorzugt ist.

Bei chromatierten Metalloberflächen sind Additive mit dem Rest (II) oder (IV) oder eine Mischung der Reste (III) und (IV) bevorzugt, wobei der Rest (II) oder eine Mischung der Reste (III) und (IV) besonders bevorzugt ist.

## Beispiele

Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25°C ermittelt.

## Haftvermittelnde Additive

In einem Extruder wurden haftvermittelnden Additive der Formel (I)

$$M_aM'_bD_cD'_d \qquad (I)$$

mit R = Methyl eingesetzt.

Tabelle 1: Verwendete Additive gemäß Formel (I)

| | a | b | c | d | R' |
|---|---|---|---|---|---|
| OMS 1 | 0 | 2 | 18 | 0 | II |
| OMS2 | 2 | 0 | 89 | 7 | II |
| OMS3 | 2 | 0 | 43 | 5 | II |
| OMS4 | 2 | 0 | 73 | 25 | II |

(fortgesetzt)

| | a | b | c | d | R’ |
|---|---|---|---|---|---|
| OMS5 | 0 | 2 | 16 | 2 | II |
| OMS6 | 0 | 2 | 18 | 0 | III |
| OMS7 | 0 | 2 | 18 | 0 | IV |
| OMS8 | 0 | 2 | 16 | 2 | III, IV |
| OMS9 | 2 | 0 | 73 | 25 | III |
| OMS 10 | 2 | 0 | 73 | 25 | IV |
| OMS 11 | 2 | 0 | 100 | 20 | III |
| OMS 12 | 2 | 0 | 40 | 10 | III, IV |

Die Verbindungen OMS 8 und OMS 12 weisen die Reste III und IV in einem molaren Verhältnis von 1:1 auf. In OMS 8 ist der Rest III in Formelbestandteil M’ und der Rest IV in Bestandteil D’ der Formel (I) enthalten.

**Allgemeine Vorschrift zur Herstellung der Polymerzusammensetzungen**

Bei der Herstellung der Polymerzusammensetzungen wurden die Additive entweder direkt durch Flüssigdosierung in die Polyamide eingearbeitet oder als Masterbatch in fester Form zugeführt.

Im Falle einer Flüssigdosierung (z. B. von der Firma Movacolor, NL) wurden die Additive im ersten Drittel der Extrusionsstrecke homogen eingemischt (0,5 bis 20 Gew.% bezogen auf das Gesamtgewicht der Polymerzusammensetzung). Bei hochviskosen Additiven wurde bei Bedarf eine Pumpe mit beheizbarer Zuleitung und beheizbarem Vorlagegefäß verwendet.

Alternativ wurden 50 %ige Masterbatche der Additive in Polyamid hergestellt. Die Masterbatche wurden mit einem separaten Feeder in den Haupteinzug der Extrusionsstrecke dosiert, wo auch das entsprechende Polyamid zugeführt wurde. Sofern Masterbachte zum Einsatz kamen, wurden die Additive mit "MB" gekennzeichnet.

Das Temperaturprofil im Extruder entsprach der Empfehlung des Herstellers des entsprechenden Polyamids. Gegebenenfalls wurden die Polyamide vorgetrocknet, wenn der Feuchtegehalt oberhalb 0,1 Gew.-% lag. Die Polymerzusammensetzungen wurden mit einer Maschinenleistung von 3 - 10kg pro Stunde in Abhängigkeit vom Prozentsatz des Additives bzw. seiner Viskosität und in Abhängigkeit des verwendeten Polymers verarbeitet.

Die Güte der Verteilung der verwendeten erfindungsgemäßen Additive in den Polyamiden wurde direkt am Strangbild bei Austritt aus dem Extruderkopf beurteilt. Bildete sich ein homogener Strang ohne Blasen, ohne Abriss des Strangs und ohne Variation der Dicke des Strangs um mehr als 20 %, wurde von einer homogenen Verteilung des Additives im Polyamid ausgegangen. In den nachgenannten Ausführungsbeispielen wurde dieser Zustand als "OK" gekennzeichnet; keine Angabe in den Tabellen bedeutet, dass diese Zusammensetzungen nicht hergestellt wurden.

Es wurden folgende Polymerzusammensetzung auf Basis von den verwendeten Polyamiden (PA) eingesetzt:

| | |
|---|---|
| Polyamid 1 - PA 612 | Vestamid DX 9300 (Evonik Industries AG, DE) |
| Polyamid 2 - PA 12 | Vestamid L1901 (Evonik Industries AG, DE) |
| Polyamid 3 - PA 1010 | Vestamid Terra DS 18 (Evonik Industries AG, DE) |
| Polyamid 4 - PACM | Trogamid CX 7323 (Evonik Industries AG, DE) |
| Polyamid 5 - PPA | Vestamid HTPlusM3000 (Evonik Industries AG, DE) |
| Polyamid 6 - PA 6 | Durethan B 30S (Lanxess AG, DE) |
| Polyamid 7- PA 66 | Durethan A30S (Lanxess AG, DE) |

Tabelle 2a: Polymerzusammensetzungen hergestellt mit Hilfe der Flüssigdosierung des Additivs

| Zusammensetzung | 0,5% | 1% | 2% | 4% | 10% | 18% |
|---|---|---|---|---|---|---|
| PA1/ OMS 1 | OK | OK | OK | OK | OK | OK |
| PA1/ OMS 2 | OK | OK | OK | OK | OK | OK |
| PA1/ OMS 3 | OK | | OK | OK | OK | |

(fortgesetzt)

| Zusammensetzung | 0,5% | 1% | 2% | 4% | 10% | 18% |
|---|---|---|---|---|---|---|
| PA1/ OMS 4 | OK | | OK | OK | OK | |
| PA1/ OMS 5 | OK | | OK | OK | OK | |
| PA1/OMS 6 | OK | OK | OK | OK | OK | OK |
| PA1/OMS 7 | OK | | | | OK | |
| PA1/OMS 8 | OK | | | | OK | |
| PA1/OMS 9 | OK | | | | OK | |
| PA1/OMS 10 | OK | | | | OK | |
| PA1/OMS 11 | OK | | | | OK | |
| PA1/OMS 12 | OK | | | | OK | |
| PA2/OMS 4 | OK | | OK | | OK | |
| PA2/OMS 7 | OK | | OK | | OK | |
| PA2 /OMS 8 | OK | | OK | | OK | |
| PA2/OMS 9 | OK | | OK | | OK | |
| PA2/OMS 10 | OK | | OK | | OK | |
| PA3/OMS 4 | OK | | OK | | OK | |
| PA3/OMS 8 | OK | | OK | | OK | |
| PA3/OMS 12 | OK | | OK | | OK | |
| PA4/OMS 4 | OK | | OK | | OK | |
| PA4/OMS 8 | OK | | OK | | OK | |
| PA4/OMS 11 | OK | | OK | | OK | |
| PA5/OMS 4 | OK | | OK | | OK | |
| PA5/OMS 8 | OK | | OK | | OK | |
| PA5/OMS 12 | OK | | OK | | OK | |
| PA6/OMS 1 | OK | | OK | | OK | |
| PA6/OMS 4 | OK | | OK | | OK | |
| PA6/OMS 12 | OK | | OK | | OK | |
| PA7/OMS 1 | OK | | OK | | OK | |
| PA7/OMS 4 | OK | | OK | | OK | |
| PA7/OMS 12 | OK | | OK | | OK | |

Tabelle 2b: Polymerzusammensetzungen hergestellt durch die Verwendung von 50%igen Masterbatchen (MB) der Additive in den entsprechenden Polymeren

| Zusammensetzung | 2% | 4% | 6% | 8% | 10% |
|---|---|---|---|---|---|
| PA1 / OMS MB 1 | OK | OK | OK | OK | OK |
| PA1 / OMS MB 2 | OK | OK | OK | OK | OK |
| PA1 / OMS MB 3 | | OK | | OK | |
| PA1 / OMS MB 4 | | OK | | OK | |
| PA1 / OMS MB 5 | | OK | | OK | |

(fortgesetzt)

| Zusammensetzung | 2% | 4% | 6% | 8% | 10% |
|---|---|---|---|---|---|
| PA 2/OMS MB 4 | | | | | OK |
| PA 2/OMS MB 8 | | | | | OK |
| PA 2/OMS MB 6 | | | | | OK |
| PA 2/OMS MB 10 | | | | | OK |
| PA 2/OMS MB 12 | | | | | OK |

Alle angefertigten Polymerzusammensetzung erfüllten die genannten Qualitätskriterien und wurden deshalb mit "OK" bezeichnet, da sie sich zur weiteren Verarbeitung zu Folien oder Pulver oder auch zu Compound zur Direktüberspritzung eigneten.

**Folienherstellung aus den erfindungsgemäßen Polymerzusammensetzungen**

Es wurden Folien im Gießverfahren, also sogenannte Cast Folien mit einer Schichtdicke von 50 bis 600 μm hergestellt (Cast Film Anlage der Firma Collin). Die Qualität der Folien wurde durch Messung und Vergleich der Schichtdicke in verschiedenen Bereichen der Folie beurteilt, wobei eine Variation der Schichtdicke von weniger als 15 % in den nachfolgenden Anwendungsbeispielen als OK bezeichnet wurde.

Zur Bestimmung der Dicke wurde an fünf willkürlich und zufällig gewählten Stellen eines Probestückes von 30 cm mal 30 cm aus der Mitte des Materials die Dicke der Folie mit Hilfe einer digitalen Bügelmessschraube der Firma Mitutoyo bei einer Schließkraft von 7 bis 9 Newton bestimmt

Es ist nicht erforderlich, dass die resultierende Folie aus der Polymerzusammensetzung transparent ist, sie kann vielmehr ein opakes Erscheinungsbild haben.

Tabelle 3: Folien - Polymerzusammensetzung und Schichtdicke

| | Folienschichtdicke in μm | | | | | |
|---|---|---|---|---|---|---|
| Polymerzusammensetzung | 50 | 100 | 150 | 250 | 400 | 600 |
| PA2/ 0,5% OMS 4 | OK | OK | OK | OK | OK | |
| PA2 / 2% OMS 4 | OK | OK | OK | OK | OK | OK |
| PA2 / 4% OMS 4 | OK | OK | OK | OK | OK | |
| PA2/10%OMS4 | OK | OK | OK | OK | | |
| PA3 / 0,5% OMS 4 | OK | OK | OK | OK | OK | OK |
| PA3/ 2% OMS 4 | OK | OK | OK | OK | OK | OK |
| PA3 / 4% OMS 4 | OK | OK | OK | OK | OK | |
| PA 3/ 10% OMS 4 | OK | OK | OK | OK | OK | |
| PA 2/ 10% OMS 4 MB | OK | OK | OK | OK | OK | OK |
| PA2/10%OMS8MB | OK | OK | OK | OK | | |
| PA 6/2% OMS1 | OK | OK | OK | OK | | |
| PA6/2% OMS 4 | OK | OK | OK | OK | | |
| PA6/2% OMS12 | OK | OK | OK | OK | | |

Nicht angegebene Werte bedeuten, dass diese Folien nicht untersucht wurden. Es ist ersichtlich, dass alle angefertigten Folien die genannten Qualitätskriterien erfüllten.

**Herstellung eines Faserverbundhalbzeugs auf Basis einer Folie**

Die gefertigten Folien wurden zu Faserverbundhalbzeugen nach dem Film-Stacking-Verfahren oder Schmelze-Direkt-Verfahren weiterverarbeitet.

Die Ausgestaltung der Anlagentechnik zur Durchführung der beiden Verfahren umfasst Einheiten zur Materialzuführung, eine Intervall-Presseinheit mit Imprägnier- und Verbundstrecke sowie nachgeschaltet ein Walzwerk und eine Konfektioniereinheit. Die Materialzuführung beinhaltet Rollenhalterungen für die einzelnen in den jeweiligen Verfahren eingesetzten Polyamidfolien und Textilhalbzeuge wie Gewebe oder Gelege. Im Falle des Schmelze-Direkt-Verfahrens ist zudem eine Plastifiziereinheit für die Direktimprägnierung mit Kunststoffschmelzen vorhanden. Die Imprägnier- und Verbundstrecke, in der die zugeführten Folien, Textilhalbzeuge und ggf. Schmelzen zusammengeführt werden, ist durch die Intervall-Presseinheit vorgegeben. Derartige Anlagen sind hinreichend bekannt, siehe beispielsweise Publikationen der Firma Neue Materialien Fürth GmbH.

Die Faserverbundhalbzeuge können hinsichtlich ihrer Eigenschaften im Dreipunktbiegeversuch charakterisiert werden. Exemplarisch werden aus den folgenden erfindungsgemäßen Polymerzusammensetzungen in Form einer Folie mit einer Schichtdicke von 150 $\mu$m, die als modifizierte Randfolie 44 Verwendung findet, Faserverbundhalbzeuge mit GF- und CF-Matten hergestellt, wie sie u.a. von der Firma Lange und Ritter erhältlich sind. Dabei wird alternierender Lagenaufbau verwendet, wobei die übrigen Polymerlagen/Folienlagen jeweils das Polymer ohne Additiv der Formel (I) ist. Nachdem der Lagenaufbau abgeschlossen ist, werden die Materialien verpresst (es wird einer Presse der Firma Gibitre genutzt, bei einer Kraft von 20 bar wird bei einer Temperatur von 260°C das Werkzeug für 3 Minuten geschlossen gehalten). Nach sieben Tagen Lagerung der Faserverbundhalbzeugteile unter Normklima werden die Proben einem Dreipunktbiegeversuch unterzogen. Die unten stehende Tabelle charakterisiert dabei Halbzeuge auf GF-Basis als "OK" wenn sie mehr als 300MPa in der Zugfestigkeit aufweisen und solche auf CF-Basis als "OK", wenn sie mehr als 500MPa in der Zugfestigkeit aufweisen.

Material 1: Glasgewebe 92140 - FK 800 390
Material 2: Glasgewebe 92125 - FK 800 280
Material 3: Glasgewebe 92110 - FK 800 163
Material 4: Carbonfasergewebe 02C160K - Faden 4x4
Material 5: Carbonfasergewebe 02C245K - Faden 6x6
Die Materialien 1-5 sind erhältlich bei der Firma Lange+ Ritter GmbH, DE

Für die Schichten, die nicht als Randfolie fungieren, wurde PA2 eingesetzt.

Tabelle 4: Zugfestigkeit von Faserverbundhalbzeugen auf Folienbasis

| Randfolie 44 | GF | Dreipunktbiegeversuch | CF | Dreipunktbiegeversuch |
|---|---|---|---|---|
| PA2/ 2% OMS 4 | Material 1 | OK | Material 4 | OK |
| PA2 / 4% OMS 4 | Material 1 | OK | Material 4 | OK |
| PA3 / 2% OMS 4 | Material 1 | OK | Material 4 | OK |
| PA3 / 4% OMS 4 | Material 1 | OK | Material 4 | OK |
| PA2 / 2% OMS 4 | Material 2 | OK | Material 5 | OK |
| PA2 / 4% OMS 4 | Material 2 | OK | Material 5 | OK |
| PA3 / 2% OMS 4 | Material 2 | OK | Material 5 | OK |
| PA3/ 4% OMS 4 | Material 2 | OK | Material 5 | OK |
| PA2 / 2% OMS 4 | Material 3 | OK | | |
| PA2 / 4% OMS 4 | Material 3 | OK | | |
| PA2 / 2% OMS 4 | Material 3 | OK | | |
| PA2 / 4% OMS 4 | Material 3 | OK | | |

**Herstellverfahren für Hybridbauteile**

Im weiteren werden Ausführungsbeispiele für Hybridbauteile beschrieben. Verbundkräfte zwischen Metall und Faserverbundhalbzeug werden bestimmt, nach Verbindung dieser beiden Teile durch Verwendung einer erfindungsgemäßen Polymerzusammensetzung in Form einer Folie bzw. in Form von Pulver dieser Polymerzusammensetzung mit einer Feinteiligkeit von 99.5% feiner als 100 Micrometer. Dabei wird die Haftung 24h nach Herstellung gemessen im

Zugversuch.

Die Herstellung des Verbundes wird hier beschrieben. Das Metallsubstrat (Substrat 1) wird auf eine gerade Fläche gelegt. Danach wird eine Folie mit einer Fläche von 2,5 cm x 7,5 cm ausgeschnitten und an das eine Ende des insgesamt 20 cm langen Metalls bündig gelegt. Alternativ kann anstatt der Folie Pulver mit 100 Micrometer verwendet werden und dann auf eben diese genannte Fläche mit einer Menge aufgestreut werden, die zu der gewünschten Schichtdicke führt. Dabei wird die Fläche mit einer Maske abgedeckt, so dass exakt die Fläche mit dem korrekten Gewicht bedeckt wird. Danach wird das zweite Substrat (Substrat2) so aufgelegt, so dass das Substrat 2 exakt auf der Kante der Folie bzw. des Pulvers in der 7,5cm von der Kante entfernten Fläche des Substrates 1 endet. Da das Substrat 2 mit 20cm dann ebenfalls 12.5cm übersteht, kann in einem Zugversuch mit der einen Backe der Zwickmaschine das Metallsubstrat 1 gepackt werden und mit der anderen Backe das Substrat 2.

Die Kraft wird im Zugversuch gemessen. Dabei stellen Werte in Tabelle gemittelte 3fach Bestimmungen dar.

Es wurden verschiedene kommerziell erhältliche Metalle eingesetzt, die bei Rocholl GmbH, DE, unter den folgenden Bezeichnungen erhalten wurden:

| | |
|---|---|
| Metall 1 | Steel Test Steel DC04 1.5mm |
| Metall 2 | Steel Hot-dip galvanised Test Steel from DOW |
| Metall 3 | Steel DC01ZN140 + SiO2 |
| Metall 4 | Steel DC01ZN140 + SiO2 + HV |
| Metall 5 | Steel DC01 ZE 25/25 (electro galvanised) |
| Metall 6 | Steel DX 51S + Z275 (hot-dip ganvanised) |
| Metall 7 | Aluminium EN-AW 5754 + $SiO_2$ |
| Metall 8 | Aluminium EN-AW 5754 + $SiO_2$ + HV |
| Metall 9 | Aluminium AW 5754 + Alodine 1227 (chromated) |
| Metall 10 | Steel DC 4 |

Zusatz "$SiO_2$": Silikatisierung der Oberfläche mittels flammenpyrolytischer Abscheidung (Pyrosil-Verfahren der Fa. Sura, DE).

Zusatz "HV": Modifiziertes Aminosilan der Fa. Sura, DE, als Haftvermittler.

Das verwendete Faserhalbzeug ist ein Tepex® dynalite 102-RG600(x)/47% Roving von der Firma Lanxess/Bond Laminates, DE. Es wurden Materialien mit 2 Gew.-% Additiv der Formel (I) verwendet, um exemplarisch die erzielbaren Kräfte zu illustrieren.

Tabelle 5: Zugfestigkeit von Hybridbauteilen

| Metall | Polymerzusammensetzung | Tensile Strength in MPa |
|---|---|---|
| 1 | PA1 | n.b. |
| 3 | PA1 | n.b. |
| 7 | PA1 | n.b. |
| 1 | PA1/OMS 2 als Pulver | 62 |
| 2 | PA1/OMS 2 als Pulver | 54 |
| 3 | PA1/OMS 2 als Pulver | 49 |
| 4 | PA1/OMS 2 als Pulver | 57 |
| 5 | PA1/OMS 2 als Pulver | 65 |
| 6 | PA1/OMS 2 als Pulver | 52 |
| 7 | PA1/OMS 2 als Pulver | 51 |
| 8 | PA1/OMS 2 als Pulver | 65 |
| 9 | PA1/OMS 2 als Pulver | 78 |
| 10 | PA1/OMS 2 als Pulver | 62 |
| 9 | PA1/OMS 9 als Pulver | 56 |
| 9 | PA1/OMS 10 als Pulver | 72 |

(fortgesetzt)

| Metall | Polymerzusammensetzung | Tensile Strength in MPa |
|---|---|---|
| 9 | PA1/OMS 8 als Pulver | 61 |
| 3 | PA1/OMS 9 als Pulver | 62 |
| 3 | PA1/OMS 10 als Pulver | 75 |
| 3 | PA1/OMS 8 als Pulver | 58 |
| 7 | PA1/OMS 9 als Pulver | 48 |
| 7 | PA1/OMS 10 als Pulver | 57 |
| 7 | PA1/OMS 8 als Pulver | 51 |
| 1 | PA3 | 122 |
| 9 | PA3 | 115 |
| 1 | PA3/OMS 4 als Pulver | 165 |
| 1 | PA3/OMS 8 als Pulver | 161 |
| 1 | PA3/OMS12 als Pulver | 154 |
| 3 | PA3/OMS 4 als Pulver | 152 |
| 3 | PA3/OMS 8 als Pulver | 165 |
| 3 | PA3/OMS12 als Pulver | 167 |
| 7 | PA3/OMS 4 als Pulver | 148 |
| 7 | PA3/OMS 8 als Pulver | 161 |
| 7 | PA3/OMS12 als Pulver | 171 |
| 9 | PA3/OMS 4 als Pulver | 185 |
| 9 | PA3/OMS 8 als Pulver | 160 |
| 9 | PA3/OMS12 als Pulver | 164 |
| 1 | PA6/OMS 1 als Folie | 54 |
| 1 | PA6/OMS 4 als Folie | 63 |
| 1 | PA6/OMS 12 als Folie | 77 |
| 10 | PA6/OMS 1 als Folie | 59 |
| 10 | PA6/OMS 4 als Folie | 73 |
| 10 | PA6/OMS 12 als Folie | 65 |

In der oben stehenden Tabelle bedeutet das Kürzel "n.b.", dass keine Kräfte bestimmbar sind, weil das Hybridbauteil beim Entfernen aus der Presse keine Haftung aufweist und somit kein Zugfestigkeitsversuch durchgeführt werden kann.

## Patentansprüche

**1.** Polymerzusammensetzung enthaltend

a) 50 bis 99,7 Gew.-% mindestens eines Polymers, ausgewählt aus Polyamiden, ihren Mischungen und Polyaryletherketonen, und
b) 0,3 bis 20 Gew.-% eines oder mehrerer Additive der Formel (I):

$$M_aM'_bD_cD'_d \qquad (I)$$

mit

$M = [R_3SiO_{1/2}]$
$M' = [R'R_2SiO_{1/2}]$
$D = [R_2SiO_{2/2}]$
$D' = [R'RSiO_{2/2}]$

wobei jedes R unabhängig voneinander ausgewählt ist aus der Gruppe bestehend aus H, Alkylresten mit 1 bis 12 C-Atomen und einem Phenylrest, und R' ausgewählt ist aus einem Rest der Formeln (II), (III) oder (IV), wobei (II) ein Alkylamino-Rest

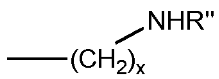 (II)

mit x = 1 bis 20 und R'', ausgewählt aus H und einem Alkylrest mit 1 bis 12 C-Atomen, (III) ein (Trialkoxysilyl)methylen-Rest

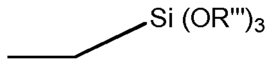 (III)

worin R''' ein Alkylrest mit 1 bis 4 C-Atomen ist, und (IV) ein Epoxycyclohexylalkyl-Rest

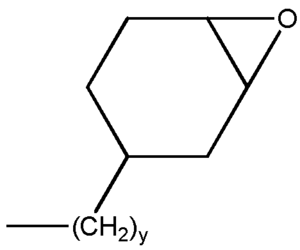 (IV)

mit y = 1 bis 4,
bedeuten,
wobei für die Indizes gilt

a = 0 bis 2
b = 0 bis 2
c = 10 bis 500
d = 0 bis 50

$$a + b = 2$$

und

$$b + d \geq 2,$$

und wobei sich die Anteile aller Bestandteile der Zusammensetzung zu 100 Gew.-% addieren.

**2.** Polymerzusammensetzung nach Anspruch 1, **dadurch gekennzeichnet, dass** R Methyl oder Phenyl ist.

3. Polymerzusammensetzung nach Anspruch 1 oder 2, **dadurch gekennzeichnet, dass** ein Verhältnis der Summe der Indizes a + c zur Summe der Indizes b + d im Bereich (a+c)/(b+d) von 2 bis 50, insbesondere im Bereich von 4 bis 20, besonders bevorzugt im Bereich von 5 bis 15 liegt.

4. Polymerzusammensetzung nach einem der vorhergehenden Ansprüche, **dadurch gekennzeichnet, dass** für Index c gilt: c = 15 bis 100, insbesondere c = 20 bis 50.

5. Polymerzusammensetzung nach einem der vorhergehenden Ansprüche, **dadurch gekennzeichnet, dass**

   (i) für den Fall, dass b = 2 ist, für Index d gilt: d = 0 bis 20, insbesondere d = 1 bis 10; und
   (ii) für den Fall, dass b = 0 ist, für Index d gilt: d = 2 bis 20, insbesondere d = 3 bis 10.

6. Polymerzusammensetzung nach einem der vorhergehenden Ansprüche, **dadurch gekennzeichnet, dass** die Polymerzusammensetzung 0,5 bis 10 Gew.-% des haftvermittelnden Additivs enthält.

7. Polymerzusammensetzung einem der vorhergehenden Ansprüche, **dadurch gekennzeichnet, dass** das Polyamid ausgewählt ist aus der Gruppe umfassend Homopolyamide des Aminocarbonsäure-Typs, Homopolyamide des Diamin-Dicarbonsäure-Typs, Copolyamide und Mischungen daraus.

8. Polymerzusammensetzung nach Anspruch 7, **dadurch gekennzeichnet, dass** das Polyamid ausgewählt wird aus Polyamid 6, Polyamid 6.6, Polyamid 610, Polyamid 612, Polyamid 1010, Polyamid 12 und Mischungen daraus.

9. Hybridbauteil umfassend Metall und Polymerzusammensetzung nach einem der Ansprüche 1 bis 8.

10. Hybridbauteil nach Anspruch 9, **dadurch gekennzeichnet, dass** zwischen dem Metall und der Polymerzusammensetzung mindestens eine weitere Schicht einer Polymerzusammensetzung als Haftvermittler angeordnet ist.

11. Folie enthaltend eine Polymerzusammensetzung nach einem der Ansprüche 1 bis 8, **dadurch gekennzeichnet, dass** die Folie eine mittlere Dicke zwischen 10 $\mu$m und 600 $\mu$m aufweist.

12. Folie nach Anspruch 11, **dadurch gekennzeichnet, dass** das haftvermittelnde Additiv der Formel (I) zumindest bereichsweise an ihrer Grenzfläche angereichert ist.

13. Kunststoffhalbzeug umfassend mindestens ein Polymer, ausgewählt aus Polyamiden, ihren Mischungen und Polyaryletherketonen (Kunststoffwerkstoff), **dadurch gekennzeichnet, dass** zumindest ein Teil der Oberfläche des Kunststoffwerkstoffs mit mindestens einer Polymerzusammensetzung gemäß einem der Ansprüche 1 bis 8 beschichtet ist.

14. Verfahren zur Herstellung eines Kunststoffhalbzeugs nach Anspruch 13, umfassend die Schritte:

   a) Bereitstellen eines Kunststoffwerkstoffs;
   b) Aufbringen mindestens einer Schicht der Polymerzusammensetzung nach einem der Ansprüche 1 bis 8.

15. Hybridbauteil umfassend Metall und Kunststoffhalbzeug nach Anspruch 13.

## Claims

1. Polymer composition comprising

   a)from 50 to 99.7% by weight of at least one polymer selected from polyamides, mixtures of these and polyaryl ether ketones, and
   b)from 0.3 to 20% by weight of one or more additives of the formula (I):

$$M_aM'_bD_cD'_d \qquad (I)$$

   Where

M = $[R_3SiO_{1/2}]$
M' = $[R'R_2SiO_{1/2}]$
D = $[R_2SiO_{2/2}]$,
D' = $[R'RSiO_{2/2}]$

where each R is selected mutually independently from the group consisting of H, alkyl moieties having from 1 to 12 C atoms and a phenyl moiety, and
R' is selected from a moiety of the formulae (II), (III) or (IV),
where (II) is an alkylamino moiety

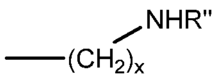
(II)

where x = from 1 to 20 and R" is selected from H and an alkyl moiety having from 1 to 12 C atoms, (III) is a (trialkoxysilyl)methylene moiety

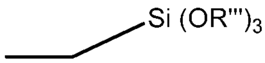
(III)

in which R'" is an alkyl moiety having from 1 to 4 C atoms,
and (IV) is an epoxycyclohexylalkyl moiety

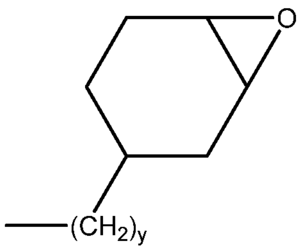
(IV)

where y = from 1 to 4,
where the definitions of the indices are as follows:

a = from 0 to 2
b = from 0 to 2
c = from 10 to 500
d = from 0 to 50

$$a + b = 2$$

and

$$b + d \geq 2,$$

and where the proportions of all of the constituents of the composition give a total of 100% by weight.

2. Polymer composition according to Claim 1, **characterized in that** R is methyl or phenyl.

3. Polymer composition according to Claim 1 or 2, **characterized in that** the ratio of the sum of the indices a + c to the sum of the indices b + d, (a+c)/(b+d), is in the range from 2 to 50, in particular in the range from 4 to 20, particularly preferably in the range from 5 to 15.

**4.** Polymer composition according to any of the preceding claims, **characterized in that** the definition of index c is: c = from 15 to 100, in particular c = from 20 to 50.

**5.** Polymer composition according to any of the preceding claims, **characterized in that**

(i) in the event that b = 2, the definition of index d is: d = from 0 to 20, in particular d = from 1 to 10; and
(ii) in the event that b = 0, the definition of index d is: d = from 2 to 20, in particular d = from 3 to 10.

**6.** Polymer composition according to any of the preceding claims, **characterized in that** the polymer composition comprises from 0.5 to 10% by weight of the adhesion-promoting additive.

**7.** Polymer composition according to any of the preceding claims, **characterized in that** the polyamide is selected from the group comprising homopolyamides of aminocarboxylic acid type, homopolyamides of diamine-dicarboxylic acid type, copolyamides and mixtures thereof.

**8.** Polymer composition according to Claim 7, **characterized in that** the polyamide is selected from nylon-6, nylon-6,6, nylon-6,10, nylon-6,12, nylon-10,10, nylon-12 and mixtures thereof.

**9.** Hybrid component comprising metal and polymer composition according to any of Claims 1 to 8.

**10.** Hybrid component according to Claim 9, **characterized in that** between the metal and the polymer composition the arrangement has at least one other layer of a polymer composition as adhesion promoter.

**11.** Foil comprising a polymer composition according to any of Claims 1 to 8, **characterized in that** the average thickness of the foil is from 10 μm to 600 μm.

**12.** Foil according to Claim 11, **characterized in that**, at least in regions at the surface, there is increased concentration of the adhesion-promoting additive of the formula (I).

**13.** Semifinished plastics product comprising at least one polymer selected from polyamides, mixtures of these and polyaryl ether ketones (plastics material), **characterized in that** at least one part of the surface of the plastics material has been coated with at least one polymer composition according to any of Claims 1 to 8.

**14.** Process for the production of a semifinished plastics product according to Claim 13, comprising the following steps:

a) Provision of a plastics material;
b) Application of at least one layer of the polymer composition according to any of Claims 1 to 8.

**15.** Hybrid component comprising metal and semifinished plastics product according to Claim 13.

## Revendications

**1.** Composition polymère contenant :

a) 50 à 99,7 % en poids d'au moins un polymère choisi parmi les polyamides, leurs mélanges et les polyaryléthercétones, et
b) 0,3 à 20 % en poids d'un ou de plusieurs additifs de formule (I) :

$$M_aM'_bD_cD'_d \qquad (I)$$

avec

$M = [R_3SiO_{1/2}]$
$M' = [R'R_2SiO_{1/2}]$
$D = [R_2SiO_{2/2}]$
$D' = [R'RSiO_{2/2}]$

chacun des R étant choisis indépendamment les uns des autres dans le groupe constitué par H, les radicaux alkyle de 1 à 12 atomes C et un radical phényle, et
R' étant choisi parmi un radical de formule (II), (III) ou (IV),
(II) signifiant un radical alkylamino

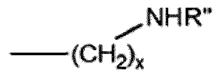

(II)

avec x = 1 à 20, et R'' étant choisi parmi H et un radical alkyle de 1 à 12 atomes C,
(III) signifiant un radical (trialcoxysilyl)méthylène

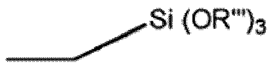

(III)

R''' étant un radical alkyle de 1 à 4 atomes C,
et (IV) signifiant un radical époxycyclohexylalkyle

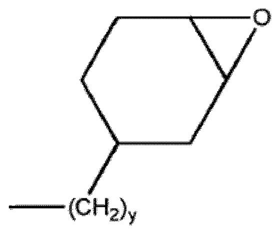

(IV)

avec y = 1 à 4,
les indices ayant les significations suivantes :

a = 0 à 2,
b = 0 à 2,
c = 10 à 500,
d = 0 à 50,

$$a+b = 2$$

et

$$b+d \geq 2,$$

et la somme des proportions de tous les constituants de la composition étant de 100 % en poids.

2. Composition polymère selon la revendication 1, **caractérisée en ce que** R représente méthyle ou phényle.

3. Composition polymère selon la revendication 1 ou 2, **caractérisée en ce qu'**un rapport entre la somme des indices a + c et la somme des indices b + d se situe dans la plage (a+c)/(b+d) de 2 à 50, notamment dans la plage de 4 à 20, de manière particulièrement préférée dans la plage de 5 à 15.

4. Composition polymère selon l'une quelconque des revendications précédentes, **caractérisée en ce que** pour l'indice c : c = 15 à 100, notamment c = 20 à 50.

5. Composition polymère selon l'une quelconque des revendications précédentes, **caractérisée en ce que**

(i) lorsque b = 2, pour l'indice d : d = 0 à 20, notamment d = 1 à 10 ; et
(ii) lorsque b = 0, pour l'indice d : d = 2 à 20, notamment d = 3 à 10.

**6.** Composition polymère selon l'une quelconque des revendications précédentes, **caractérisée en ce que** la composition polymère contient 0,5 à 10 % en poids de l'additif promoteur d'adhésion.

**7.** Composition polymère selon l'une quelconque des revendications précédentes, **caractérisée en ce que** le polyamide est choisi dans le groupe comprenant les homopolyamides de type acide aminocarboxylique, les homopolyamides de type acide diamine-dicarboxylique, les copolyamides et leurs mélanges.

**8.** Composition polymère selon la revendication 7, **caractérisée en ce que** le polyamide est choisi parmi le polyamide 6, le polyamide 6.6, le polyamide 610, le polyamide 612, le polyamide 1010, le polyamide 12 et leurs mélanges.

**9.** Composant hybride comprenant un métal et la composition polymère selon l'une quelconque des revendications 1 à 8.

**10.** Composant hybride selon la revendication 9, **caractérisé en ce qu'**au moins une couche supplémentaire d'une composition polymère est agencée en tant que promoteur d'adhésion entre le métal et la composition polymère.

**11.** Film contenant une composition polymère selon l'une quelconque des revendications 1 à 8, **caractérisé en ce que** le film présente une épaisseur moyenne comprise entre 10 μm et 600 μm.

**12.** Film selon la revendication 11, **caractérisé en ce que** l'additif promoteur d'adhésion de formule (I) est accumulé au moins dans des zones de son interface.

**13.** Produit semi-fini en plastique comprenant au moins un polymère, choisi parmi les polyamides, leurs mélanges et les polyaryléthercétones (matériau plastique), **caractérisé en ce qu'**au moins une partie de la surface du matériau plastique est revêtue avec au moins une composition polymère selon l'une quelconque des revendications 1 à 8.

**14.** Procédé de fabrication d'un produit semi-fini en plastique selon la revendication 13, comprenant les étapes suivantes :

a) la préparation d'un matériau plastique ;
b) l'application d'au moins une couche de la composition polymère selon l'une quelconque des revendications 1 à 8.

**15.** Composant hybride comprenant un métal et un produit semi-fini en plastique selon la revendication 13.

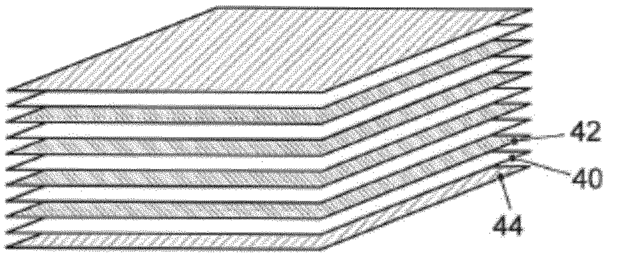


FIG. 1

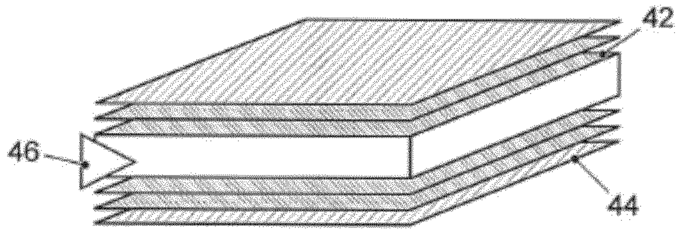


FIG. 2

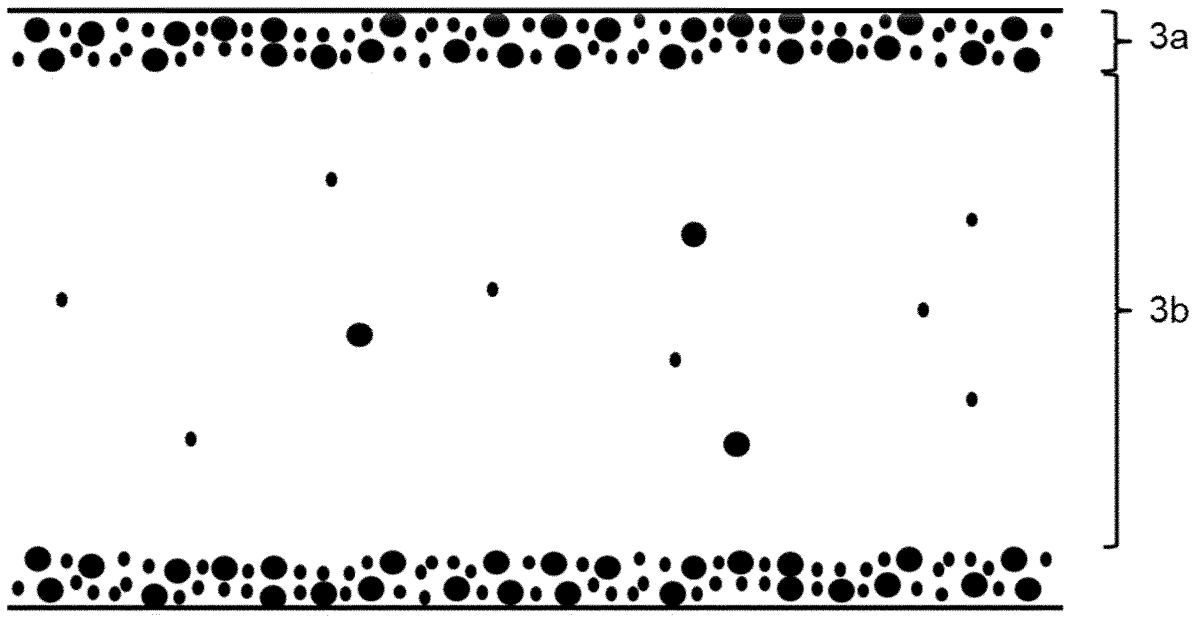


FIG. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1808468 A
- EP 2435246 A
- US 2007287765 A1
- US 2007190306 A1
- DE 102007062063 A
- WO 2008025729 A
- EP 1065236 A
- DE 19654058 A
- DE 19654179 A
- DE 102009042103 A


### In der Beschreibung aufgeführte Nicht-Patentliteratur


- Römpp Lexikon Lacke und Druckfarben. Georg Thieme Verlag, 1998, 73, , 74
- Römpp Lexikon Lacke und Druckfarben. Georg Thieme Verlag, 1998, 274-276
- Römpp Chemie Lexikon. Georg Thieme Verlag, 1992, vol. 6, 4921
- **J. M. WARAKOMSKI.** *Chem. Mat.,* 1992, vol. 4, 1000-1004
- **HOUBEN-WEYL.** Methoden der Organischen Chemie. Georg Thieme Verlag, 1987, vol. E20, 1482-1487
- *Polymer,* 2001, vol. 42, 3649-3655
- Tagungsband zur Fachtagung. Thermoplastische Faserverbundkunststoffe. Carl Hanser Verlag, 15. Mai 2013, 5, , 13, , 17